(19) Europäisches Patentamt
European Patent Office
Office européen des brevets

(11) EP 0 620 263 B1

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(51) Int Cl.6: **C09K 19/34**, C09K 19/46, C09K 19/58

(21) Anmeldenummer: **94105022.1**

(22) Anmeldetag: **30.03.1994**

(54) **Smektische Flüssigkristallmischung**

Smectic liquid crystal mixture

Mélange liquide installin smectique

(84) Benannte Vertragsstaaten:
**DE FR GB**

(30) Priorität: **10.04.1993 DE 4311967**

(43) Veröffentlichungstag der Anmeldung:
**19.10.1994 Patentblatt 1994/42**

(73) Patentinhaber: **HOECHST AKTIENGESELLSCHAFT**
**65929 Frankfurt am Main (DE)**

(72) Erfinder:
- **Hornung, Barbara**
**D-63594 Hasselroth (DE)**
- **Jungbauer, Dietmar, Dr.**
**D-64331 Weiterstadt (DE)**
- **Manero, Javier, Dr.**
**D-65931 Frankfurt (DE)**

(56) Entgegenhaltungen:
**EP-A- 0 292 954**
**EP-A- 0 351 746**
**EP-A- 0 361 272**
**EP-A- 0 365 820**
**EP-A- 0 541 081**
**EP-A- 0 578 054**
**EP-A- 0 603 786**
**WO-A-92/12974**
**WO-A-93/13093**
**DE-A- 4 116 751**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 620 263 B1

**Beschreibung**

Die Erfindung betrifft eine smektische, insbesondere eine ferroelektrische Flüssigkristallmischung auf Basis von Phenylpyrimidinderivaten.

Flüssigkristalle (LC) haben aufgrund der ungewöhnlichen Kombination von anisotropem und fluidem Verhalten eine Vielzahl von Anwendungsmöglichkeiten in elektrooptischen Schalt- und Anzeigevorrichtungen gefunden.

Neben den seit langem eingesetzten nematischen Flüssigkristallphasen finden in junger Zeit verstärkt auch smektische Flüssigkristallphasen, insbesondere ferroelektrische (FLC), Anwendung.

Für die praktische Verwendung von ferroelektrischen Flüssigkristallen in elektrooptischen Schalt- und Anzeigeelementen werden chirale, geneigt-smektische Phasen, wie $S_C^*$-Phasen, benötigt (siehe z.B. R.B. Meyer, L. Liebert, L. Strzelecki und P. Keller, J. Physique 36, L-69 (1975)), die über einen großen Temperaturbereich stabil sind. Dieses Ziel kann man mit Verbindungen erreichen, die selbst solche Phasen ausbilden, oder aber, indem man nicht chirale, geneigt-smektische Phasen ausbildende Verbindungen mit optisch aktiven Verbindungen dotiert [siehe z.B. M.Brunet, Cl. Williams, Ann. Phys. 3, 237 (1978)].

Schalt- und Anzeigevorrichtungen, die ferroelektrische Flüssigkristall-Mischungen enthalten ("FLC-Lichtventile"), sind beispielsweise aus EP-B 0 032 362 (= US-A 4 367 924) bekannt. LC-Lichtventile sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechenanzeigen oder LC-Displays im Bereich der Bürokommunikation und des Fernsehens. Dazu zählen aber auch optische Verschlüsse ("light shutter"), wie sie z.B. in Kopiermaschinen und Druckern eingesetzt werden. Auch sogenannte "Spatial Light Modulators" sind Anwendungsbereiche von LC-Lichtventilen (siehe Liquid Crystal Device Handbook, Nikkan Kogyo Shimbun, Tokyo, 1989; ISBN 4-526-02590-9C 3054 und darin zitierte Arbeiten).

Die angesprochenen elektrooptischen Schalt- und Anzeigevorrichtungen sind im allgemeinen so aufgebaut, daß die FLC-Schicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem erhalten sie mindestens einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfschichten, wie Diffusionssperr- oder Isolationsschichten, enthalten.

Die oben erwähnten Orientierungsschichten sind üblicherweise geriebene Filme aus organischen Polymeren oder schräg aufgedampftem Siliziumoxid und von Displayhersteller zu Displayhersteller verschieden.

Die Orientierungsschichten bringen, bei hinreichend kleinem Abstand der Begrenzungsscheiben, die FLC-Moleküle in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle zwei gleichwertige Orientierungen, zwischen denen sie durch pulsartiges Anlegen eines elektrischen Feldes geschaltet werden können.

Um über das gesamte Display eine einheitliche planare Orientierung in der $S_C^*$-Phase zu erreichen ist es vorteilhaft, wenn die Phasenfolge der Flüssigkristallmischung mit abnehmender Temperatur lautet: Isotrop - nematisch - smektisch A - smektisch C (s. z.B. K. Flatischler et al., Mol. Cryst. Liq. Cryst. 131, 21 (1985); T. Matsumoto et al., p. 468-470, Proc. of the 6th Int. Display Research Conf., Japan Display, 30. September -2. October 1986, Tokyo, Japan; M. Murakami et. al., ibid. p. 344-347).

Für ferroelektrische (chiral smektische) Flüssigkristallmischungen muß zusätzlich die Bedingung erfüllt sein, daß die Ganghöhe der Helix in der $S_C^*$-Phase genügend groß ist, um die Ausbildung einer Helix im Display zu verhindern, und in der N*-Phase so groß ist, daß sich beim Abkühlprozeß im Display kein verdrillter Zustand, sondern eine homogene nematische Phase ausbildet. Die Ausbildung einer einheitlichen planaren Orientierung im Display ist notwendig, damit ein großer Kontrast erzielt wird.

Das Hin- und Herschalten der Moleküle (und somit Hell- oder Dunkelstellung bei fester Polarisatoreinstellung) erfolgt, wie schon erwähnt, durch pulsartiges Anlegen eines elektrischen Feldes. Aufgrund der Bistabilität der FLC-Moleküle muß Spannung nur für einen Orientierungswechsel anliegen. Eine Unterteilung des Displays in einzelne Bildpunkte erreicht man durch die bekannte Matrixanordnung der Elektroden. Die Elektroden befinden sich in der Regel auf den Innenseiten der Trägerplatten des Displays mit den Zeilen auf der einen und den Spalten auf der anderen Trägerplatte. In den Überkreuzungsbereichen, den Bildpunkten B, wird der zwischen Zeilen und Spalten befindliche Flüssigkristall geschaltet. Eine grundlegende Beschreibung einer Multiplex-Adressierung für FLC-Displays findet sich z.B. in Proc. SID 28/2, 211 (1978) und Ferroelectrics 94, 3 (1989).

Die Schaltzeit T der FLC-Mischung im Display ist umgekehrt proportional zur spontanen Polarisation $P_S$ und liegen im Bereich von µs.

$$T = \frac{\eta}{P_s \cdot E}$$

E = Höhe des angelegten el. Feldes

$\eta$ = Rotationsviskosität

Neben der spontanen Polarisation ist der Tiltwinkel $\theta$, das ist der Winkel zwischen dem n-Direktor, d.h. der mittleren Molekülrichtung, und der Schichtnormalen von großer Bedeutung. Er beeinflußt, zusammen mit der Doppelbrechung $\Delta n$ und der Schichtdicke d, die Helligkeit des Displays nach der Beziehung:

$$T = T_o \sin^2 (4\theta) \cdot \sin^2\left(\frac{\pi \cdot \Delta n \cdot d}{\lambda}\right)$$

wobei $T_o$ die Intensität und $\lambda$ die Wellenlänge des einfallenden Lichtes ist.

Üblicherweise werden bei Matrixanordnung der Elektroden im Display als Spalten diejenigen Elektroden bezeichnet, die mit informationstragenden Pulsen (auch Spalten- oder Datenpulse genannt) beaufschlagt werden. Die Zeilen werden dann stroboskopartig sequentiell durch elektrische Pulse aktiviert, was die Voraussetzung für eine Informationsübertragung auf die Bildpunkte der Zeilen ist. Eine wichtige Eigenschaft des Displays ist die zum Aufbau bzw. Wechsel eines Bildes notwendige Zeit. Sie sollte für viele Anwendungen möglichst kurz sein.

Da die Zeilen sequentiell adressiert werden, ist es ausschlaggebend, wie lange eine Zeile angesprochen werden muß, um die Information einzulesen. Diese Einschreibzeit ist umso kürzer, je kürzer die zum Schalten des Flüssigkristalls notwendigen Spannungspulse sind. Im allgemeinen ist die maximal zu applizierende Spannung durch die Wahl der Treiber vorgegeben, so daß die zum Schalten notwendige Pulsbreite möglichst klein sein sollte.

In guter Näherung ist das Produkt aus notwendiger Pulsbreite und Spannung (=Pulshöhe) konstant, also unabhängig von der Spannung, so daß die gerade zum Schalten notwendige Pulsfläche (CPA = critical pulse area) eine die Schnelligkeit des Flüssigkristalls gut charakterisierende Größe darstellt. Die CPA sollte möglichst klein sein.

Ferner ist es vorteilhaft, wenn die LC-Mischung im Display einen hohen Margin bei geringem Flicker aufweist. (J. Dijon et al., Ferroelectrics 113 (1991) 371).

Unter Margin versteht man den Spannungsbereich bei gegebenem Ansteuerschema, in dem die Pulshöhe liegen muß, damit die LC-Mischung voll durchschaltet. Der Margin wird vom sog. Bias, d.h. dem Verhältnis aus Zeilen- und Datenpulsspannung, beeinflußt. Der Margin sollte möglichst groß sein, um Dicken- bzw. Temperaturschwankungen im Display auszugleichen.

Bei der Multiplexadressierung erfahren die Moleküle der nicht selektierten Zeilen durch die Datenpulse eine Auslenkung aus ihrem Ruhezustand und relaxieren dann wieder. Die dadurch hervorgerufene Helligkeitsschwankung wird als Flicker bezeichnet. Der Flicker führt zu einer Verminderung des Kontrastes.

Rieker et al. [Phys. Rev. Lett. 59, 2658(1987)] haben gezeigt, daß beim Abkühlen aus der isotropen Phase, durch die $S_A$-Phase die $S_C$-Phase in Displays eine sogenannte Chevron-Geometrie ausbildet, d.h., daß die Schichten geknickt sind. Deshalb muß in der oben erwähnten Beziehung zwischen Tiltwinkel und Transmission der effektive Tiltwinkel $\theta_{eff}$ eingesetzt werden.

Der effektive Tiltwinkel ist der Winkel zwischen den Projektionen von smektischer Normalen und optischer Achse des Flüssigkristalls auf die Glasoberfläche der Zelle.

Ein Display kann wahlweise in der beim Abkühlvorgang sich natürlich einstellenden Chevron-Geometrie oder in der sogenannten Quasi-Bookshelf-Geometrie (QBG) betrieben werden, in die der Flüssigkristall durch gezielte Feldbehandlung gebracht werden kann. (siehe z.B. H.Rieger et al., SID 91 Digest (Anaheim) 1991, S.396)

Gute Werte für die Mehrzahl der oben aufgeführten Parameter zu erhalten, ist mit einzelnen Substanzen kaum möglich. Deswegen ist man schon seit längerer Zeit dazu übergegangen, Mischungen verschiedener Substanzen zu verwenden. Solche Mischungen bestehen im allgemeinen aus einer achiralen Grundmischung und optisch aktiven Dotierstoffen.

Die achirale Grundmischung soll für eine breite, in einem günstigen Temperaturbereich gelegene $S_C$-Phase sorgen. Weiterhin sollte die achirale Grundmischung die Phasenfolge I-N-$S_A$-$S_C$ und einen möglichst niedrigen Schmelzpunkt aufweisen. Die optisch aktiven Dotierstoffe dienen dann zur Induzierung der Ferroelektrizität der Mischung, zur Pitch-Kompensation und zur Anpassung der optischen und dielektrischen Anisotropie.

Es ist bekannt, daß bestimmte Derivate des Phenylpyrimidins, insbesondere 5-Alkyl-2-(4-alkyloxy-phenyl)-pyrimidine, $S_C$-, $S_A$- und N-Phasen ausbilden können (D.Demus und H. Zaschke, "Flüssigkristalle in Tabellen", VEB Deutscher Verlag für Grundstoffindustrie, Leipzig 1974, S. 260-261) und daneben durch Zusatz optisch aktiver Dotierstoffe in FLC-Mischungen umgewandelt werden können [M.L. Blinov et al., Sow. Phys. Usp. 27(7), 492 (1984); L.A. Beresnew et al., Ferroelectrics 59 [321]/1(1984), vorgetragen auf der 5th. Conference of Soc. Countries in Liquid Crystals, Odessa, UDSSR, Oct. 1983; DE-A 35 15 347, EP-A 0 206 228, EP-A 0 225 195]. Weiter ist bekannt, daß tiefere Schmelzpunkte und eine Verbreiterung der gewünschten flüssigkristallinen Phasen durch Mischen mehrerer LC-Verbindungen erreicht werden [ siehe z.B. D.Demus et al., Mol. Cryst. Liq. Cryst. 25, 215(1974); J.W. Goodby, Ferroelectrics 49, 275 (1985)], und daß die Schmelzpunktsdepression umso ausgeprägter ist, je stärker sich die Mischungskomponenten strukturell unterscheiden (siehe z.B. J.S. Dave et al., J. Chem. Soc. 1955, 4305).

Trotz der durch die bisherigen Mischungen erzielten Erfolge bei der Bereitstellung neuer LC-Materialien kann die Entwicklung von LC-Grundmischungen, insbesondere aber auch von FLC-Mischungen, noch in keiner Weise als abgeschlossen betrachtet werden. Die Hersteller von Anzeigenelementen ("displays") sind für die diversen Anwendungsgebiete weiterhin an einem breiten Spektrum verschiedener Mischungen interessiert.

Aufgabe der vorliegenden Erfindung ist deshalb, Kompositionen aus geeigneten Komponenten für nicht-chirale LC-Grundmischungen, vor allem aber auch für FLC-Mischungen, bereitzustellen. Diese Mischungen sollen möglichst viele der vorstehend dargestellten Kriterien erfüllen, insbesondere einen hohen Kontrast, eine gute Orientierung, einen großen Margin, geringen Flicker, einen großen Winkel in der Chevron Geometrie und einen niedrigen Schmelzpunkt bei möglichst hoher $S_C^*/S_A$ Phasenumwandlungstemperatur aufweisen.

Es wurde überraschend gefunden, daß smektische Flüssigkristallmischungen, die eine Kombination von Alkoxyphenylpyrimidinen, metasubstituierten Sechsringaromaten und bestimmten mesogenen Verbindungen mit nur einer Flügelgruppe ein besonders günstiges Eigenschaftschaftsprofil für die Verwendung in LC Phasen aufweisen.
Gegenstand der Erfindung ist eine smektische Flüssigkristallmischung, enthaltend

A. mindestens eine Verbindung der Formel (I)

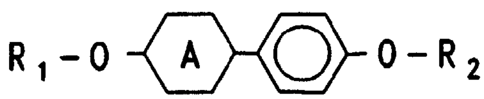 (I)

worin bedeuten:

$R_1$, $R_2$ gleich oder verschieden, eine geradkettige oder verzweigte Alkylgruppe mit 1 bis 18 bzw. 3 bis 18 C-Atomen, wobei eine dem Sauerstoff benachbarte $CH_2$-Gruppe durch -CO- ersetzt sein kann,

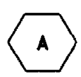 : 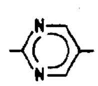 oder 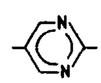

und/oder mindestens eine Verbindung der Formel (II),

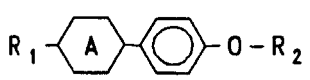 (II)

worin bedeuten:

$R_1$,$R_2$ gleich oder verschieden, eine verzweigte oder unverzweigte Alkylgruppe mit 1 bis 18 bzw. 3 bis 18 C-Atomen, wobei eine dem Sauerstoff benachbarte $CH_2$-Gruppe auch durch -CO- ersetzt sein kann;

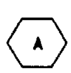 : 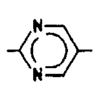 oder 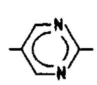 ;

B. mindestens eine Verbindung der Formel (III)

$$R^1(-A^1)_a(-M^1)_b(-A^2)_c(-M^2)_d(-A^3)_e(-M^3)_f(-A^4)\text{-}H \quad \text{(III)}$$

worin bedeuten:

| | |
|---|---|
| $R^1$ : | geradkettiger oder verzweigter Alkylrest mit 1 bis 22 bzw. 3 bis 22 C-Atomen, wobei auch eine oder zwei nicht benachbarte $CH_2$- Gruppen durch -O-, -CO-, -CO-O-, -O-CO-, -O-CO-O- oder $-Si(CH_3)_2-$ ersetzt sein können, |
| $A^1$, $A^2$, $A^3$, $A^4$ | gleich oder verschieden, 1,4-Phenylen, wobei ein oder zwei H-Atome durch F oder CN ersetzt sein können, Pyridin-2,5diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, (1,3,4)-Thiadiazol-2,5-diyl oder Naphthalin-2,6-diyl, |
| $M^1$, $M^2$, $M^3$ | gleich oder verschieden, -CO-O-, -O-CO-, $-CH_2-O-$, $-O-CH_2-$ oder $-CH_2-CH_2-$, |
| a, b, c, d, e, f | null oder eins, unter der Bedingung, daß die Summe aus a + c + e 0, 1, 2 oder 3 ist; |

C. und mindestens eine Verbindung der Formel (IV)

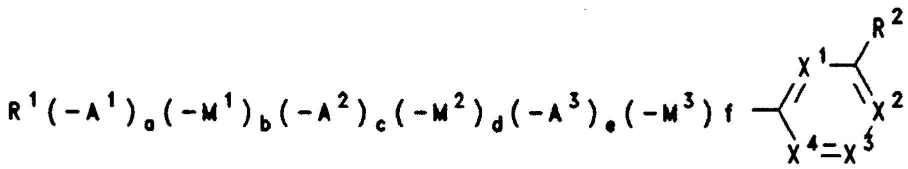

(IV)

worin bedeuten:

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2-$ ersetzt sein können, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, und $A^1$ auch 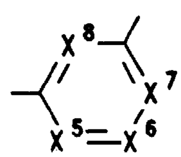 |
| $M^1$, $M^2$, $M^3$ | gleich oder verschieden, -O-, -CO-O-, -O-CO-, $-CH_2-O-$, $-O-CH_2-$, $-CH_2-CH_2-$, |
| $X^1$, $X^2$, $X^3$, $X^4$, $X^5$, $X^6$, $X^7$, $X^8$ CH oder N, | wobei die Zahl der N-Atome in einem Sechsring 0,1 oder 2 beträgt, |
| a, b, c, d, e, f | sind null oder eins, unter der Bedingung, daß die Summe aus a + c + e 0, 1, 2 oder 3 ist. |

Die erfindungsgemäßen Flüssigkristallmischungen weisen niedrige Schmelzpunkte, breite $S_C$-Phasen und einen

hohen $S_C/S_A$ Phasenübergang auf. Erfindungsgemäße ferroelektrische Flüssigkristallmischungen zeigen eine gute Orientierung, einen großen Margin, geringen Flicker und einen großen Winkel in der Chevron Geometrie.

Bevorzugt als Komponente A sind Verbindungen der Formel (I) und/oder (II), worin bedeuten:

$R^1$, $R^2$ gleich oder verschieden, eine geradkettige oder verzweigte Alkylgruppe mit 1 bis 12 bzw. 3 bis 12 C-Atomen, wobei eine dem Sauerstoff benachbarte $CH_2$-Gruppe auch durch -CO- ersetzt sein kann,

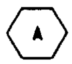 : 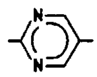 oder 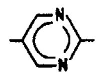 ;

Bevorzugt als Komponente B sind Verbindungen der Formel (III), worin bedeuten:

$R^1$ geradkettiger Alkylrest mit 1 bis 14 C-Atomen, wobei auch eine oder zwei nicht benachbarte $CH_2$-Gruppen durch -O-, -CO-O-, -O-CO-, -O-CO-O-oder $-Si(CH_3)_2-$ ersetzt sein können,

$A^1$, $A^2$, $A^3$, $A^4$ gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl.

Bevorzugt als Komponente C sind Verbindungen der Formel (IV) worin bedeuten:

$R^1$, $R^2$ gleich oder verschieden, geradkettiger Alkylrest mit 1 bis 14 C-Atomen, wobei auch eine oder zwei nicht benachbarte $CH_2$-Gruppen durch -O-, -CO-, -CO-O-, -O-CO-, -O-CO-O- oder $-Si(CH_3)_2$-ersetzt sein können,

$A^1$, $A^2$, $A^3$ gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl.

Neben den Komponenten A, B und C enthalten die erfindungsgemäßen LC-Mischungen vorzugsweise eine oder mehrere Verbindungen aus den Gruppen D bis G:

D. Siliziumverbindungen der Formel (V)

$$R^1(-A^1)_i(-M^1)_k(-A^2)_l(-M^2)_m(-A^3)_n-R^2 \qquad (V)$$

worin bedeuten:

$R^1$ geradkettiges oder verzweigtes Alkyl mit 1 bis 22 bzw. 3 bis 22 C-Atomen, wobei auch eine oder zwei nicht benachbarte $CH_2$-Gruppen durch -O-, -CO-, -CO-O-, -O-CO- oder -O-CO-O- ersetzt sein können,

$R^2$ geradkettiges oder verzweigtes Alkyl mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, mit der Maßgabe, daß eine, nicht an Sauerstoff gebundene, $CH_2$-Gruppe durch $-Si(CH_3)_2-$ ersetzt ist,

$A^1$, $A^2$, $A^3$gleich oder verschieden 1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl,

$M^1$, $M^2$ gleich oder verschieden -CO-O-, -O-CO-, $-CH_2-O-$, $-O-CH_2-$,

i, k, l, m, nnull oder 1, mit der Maßgabe, daß i + l + n = 2 oder 3 ist.

Bevorzugte Verbindungen aus der Gruppe D sind solche der Formel (V) worin bedeutet:

$R^1$ eine geradkettige oder verzweigte Alkylgruppe mit 1 bis 12 bzw. 3 bis 12 C-Atomen, wobei auch eine oder zwei nicht benachbarte $CH_2$-Gruppen durch -O-, -CO-O-, -O-CO- ersetzt sein können,

$R^2$ eine geradkettige oder verzweigte Alkylgruppe mit 1 bis 12 bzw. 3 bis 12 C-Atomen, wobei auch eine oder zwei nicht benachbarte $CH_2$-Gruppen durch -O-, -CO-O-, -O-CO- ersetzt sein können, und worin eine nicht an Sauerstoff gebundene $CH_2$-Gruppe durch $-Si(CH_3)_2-$ ersetzt ist.

E. Hydrochinonderivate der Formel (VI),

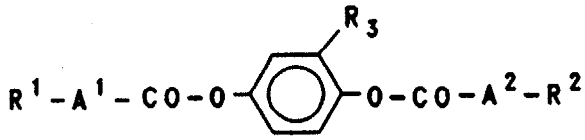

(VI)

wobei bedeuten

R1, R2: gleich oder varschieden geradkettiger oder verzweigter Alkylrest mit 1 bzw. 3 bis 16 vorzugsweise 1 bzw. 3 bis 10 C-Atomen, wobei auch eine oder zwei nicht benachbarte $-CH_2$-Gruppen durch -O-, -CO-, -O-CO-, -CO-O-, -O-CO-O-, vorzugsweise -O-, -O-CO-, -CO-O-, ersetzt sein können,

R3 $-CH_3$, $CF_3$ oder-$C_2H_5$, vorzugsweise $-CH_3$, $CF_3$.

A1, A2 gleich oder verschieden,

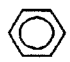 oder 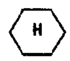 , vorzugsweise 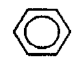 .

F. Pyridylpyrimidine der Formel (VII),

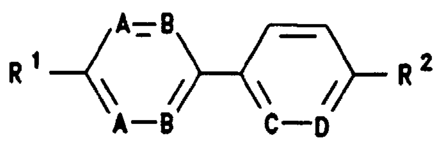

(VII)

wobei bedeuten
A gleich N und B gleich CH oder A gleich CH und B gleich N, C gleich N und D gleich CH oder C gleich CH und D gleich N, wobei eine oder zwei CH-Gruppen durch CF-Gruppen ersezt sein können,

R1, R2 gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können.

Bevorzugt sind Verbindungen der Formel (VII) in denen bedeutet

R1, R2 gleich oder verschieden, eine geradkettige oder verzweigte Alkylgruppe mit 1 bis 14 bzw. 3 bis 14 C-Atomen, wobei auch eine oder zwei nicht benachbarte $-CH_2$-Gruppen durch -O-, -CO-, -CO-O-, -O-CO- oder -O-CO-O- ersetzt sein können.

G. Phenylbenzoate der Formel (VIII)

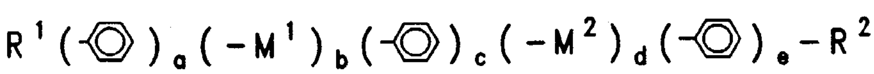

(VIII)

wobei bedeuten

| | |
|---|---|
| R1, R2 | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, |
| M1, M2 | gleich oder verschieden, -CO-O-, -O-CO-, |
| a, b, c, d, e | null oder eins, unter der Bedingung, daß a + c + e = 2 oder 3 und b + d = 1 oder 2 ist. |

Bevorzugt sind Verbindungen der Formel (VIII) mit

$R^1$,$R^2$ geradkettiger Alkylrest mit 1 bis 14 C-Atomen, wobei auch eine oder zwei nicht benachbarte $-CH_2$-Gruppen durch -O-, -CO-, -CO-O-, -O-CO- oder -O-CO-O- ersetzt sein können.

Mit Verbindungen aus den Gruppen A, B, C und gegebenenfalls D bis G werden achirale oder racemische Basismischungen hergestellt.
Erfindungsgemäße ferroelektrische Mischungen enthalten zudem optisch aktive Dotierstoffe.
Vorzugsweise enthalten solche Mischungen mindestens zwei optisch aktive Verbindungen aus den Gruppen H bis K:

H. Optisch aktive Phenylbenzoate der Formel (IX)

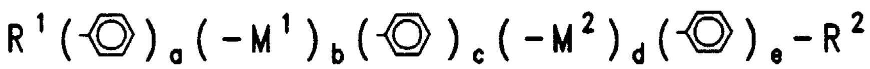

(IX)

wobei bedeuten

$R^1$, $R^2$ gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, und worin wenigstens einer der Reste $R^1$, $R^2$ eine verzweigte, optisch aktive Alkylgruppe ist,

$M^1$, $M^2$ gleich oder verschieden, -CO-O-, -O-CO- oder eine Einfachbindung a, b, c, d, e sind null oder eins, unter der Bedingung, daß die Summe aus a + c + e 2 oder 3 und b + d = 1 oder 2 ist.
Bevorzugt sind Verbindungen der Formel (IX) mit

$R^1$, $R^2$ gleich oder verschieden, ein geradkettiger oder verzweigter Alkylrest mit 1 bis 16 bzw. 3- bis 16 C-Atomen, wobei auch eine oder zwei nicht benachbarte $-CH_2$-Gruppen durch -O-, -CO-O- oder -O-CO- ersetzt sein können, wobei wenigstens einer der Reste $R^1$, $R^2$ eine verzweigte, optisch aktive Alkylgruppe ist.

I. Optisch aktive Oxiranether der Formel (X)

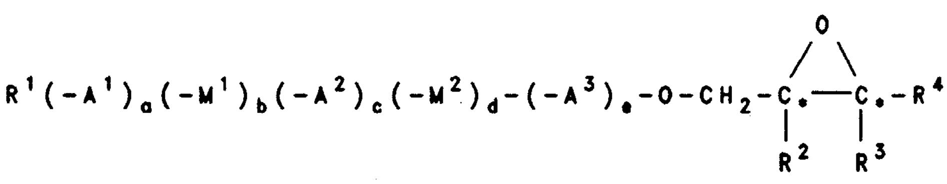

(X)

wobei die Symbole und Indizes folgende Bedeutung haben

* ein chirales Zentrum
$R^1$ ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können,

oder die nachfolgende, optisch aktive Gruppe,

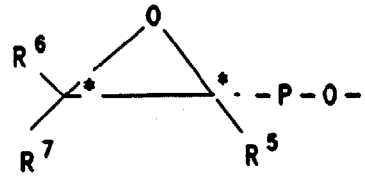

$R^2$, $R^3$, $R^4$, $R^5$, $R^6$, $R^7$ gleich oder verschieden, H oder ein geradkettiger oder verzweigter Alkylrest mit 1 bis 16 C-Atomen,

P $-CH_2-$ oder -CO-

$A^1$, $A^2$, $A^3$ sind gleich oder verschieden, 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-OH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2.$,

a, b, c, d, e null oder eins.

Die asymmetrischen C-Atome des Oxiranrings oder der Oxiranringe können gleich oder verschieden R oder S konfiguriert sein.

Bevorzugt sind Verbindungen der Formel (X) mit

$R^1$ geradkettiger Alkylrest mit 1 bis 14 C-Atomen, wobei auch eine oder zwei nicht benachbarte $-CH_2-$Gruppen durch -O-, -CO-O-, -O-CO-, oder $-Si(CH_3)_2-$ ersetzt sein können,

oder die nachfolgende, optisch aktive Gruppe,

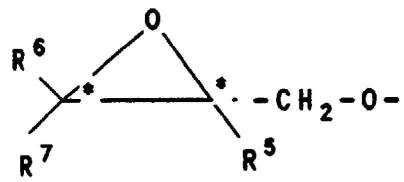

mit

$R^2$=$R^5$, $R^3$=$R^6$, $R^4$=$R^7$ gleich oder verschieden, H oder ein geradkettiger oder verzweigter Alkylrest mit 1 bis 6 C-Atomen,

$A^1$, $A^2$, $A^3$ gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl.

J. Optisch aktive Oxiranester der Formel (XI)

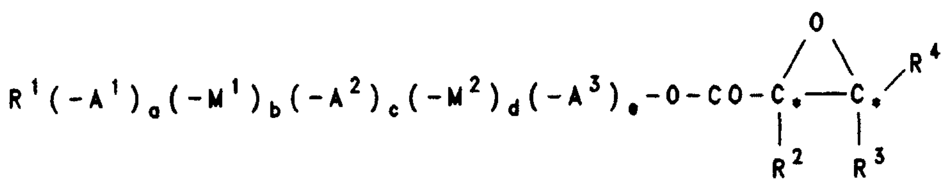

(XI)

wobei die Symbole und Indizes folgende Bedeutung haben

* ein chirales Zentrum

$R^1$ ein geradkettiger oder verzweigter Alkylrest mit 1 bis 22 bzw. 3 bis 22 C-Atomen, wobei auch eine oder zwei nicht benachbarte $-CH_2-$Gruppen durch -O-, -CO-, -CO-O-, -O-CO-, -O-CO-O- oder $-Si(CH_3)_2-$ ersetzt sein können,

$R^2$,$R^3$,$R^4$ gleich oder verschieden, H oder ein geradkettiger oder verzweigter Alkylrest mit 1 bis 16 C-Atomen,

$A^1$, $A^2$, $A^3$ gleich oder verschieden, 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e — null oder eins.

Die asymmetrischen C-Atome des Oxiranrings können, gleich oder verschieden, R oder S konfiguriert sein. Bevorzugt sind Verbindungen der Formel (XI) mit

$R^1$ — geradkettiger Alkylrest mit 1 bis 14 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können,
$R^2$, $R^3$, $R^4$ — gleich oder verschieden, H oder ein geradkettiger oder verzweigter Alkylrest mit 1 bis 6 bzw. 3 bis 6 C-Atomen,
$A^1$, $A^2$, $A^3$ — gleich oder verschieden, 1,4-Phenylen, Pyrimidin-2,5-diyl, wobei ein oder zwei H-Atome durch F ersetz sein können, trans-1,4-Cyclohexylen, (1,3,4)-Thiadiazol-2,5-diyl.

K. Optisch aktive Dioxolanether der Formel (XII)

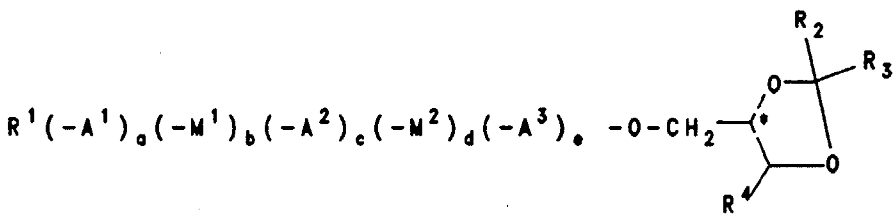

(XII)

wobei die Symbole und Indizes folgende Bedeutung haben

* — ein chirales Zentrum
$R^1$ — ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können,
$R^2$,$R^3$,$R^4$ — gleich oder verschieden H, ein geradkettiger oder verzweigter Alkylrest mit 1 bis 16 bzw. 3 bis 10 C-Atomen oder ein Alkenylrest mit 2 bis 16 C-Atomen, wobei $R^2$ und $R^3$ zusammen auch $-(CH_2)_5$- sein können,
$A^1$, $A^2$, $A^3$ — gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl,
$M^1$, $M^2$ — gleich oder verschieden, -CO-O-, -O-CO-, $-CH_2-O-$, $-O-CH_2-$, $-CH_2-CH_2-$,
a, b, c, d, e — null oder eins.

Asymmetrische C-Atome des Dioxolanrings können, gleich oder verschieden, R oder S konfiguriert sein. Bevorzugt sind Verbindungen der Formel (XII) mit

$R^1$ — geradkettiger Alkylrest mit 1 bis 14 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können,
$R^2$, $R^3$ — $CH_3$ oder zusammen $-(CH_2)_5$-,
$R^4$ — H,
$A^1$, $A^2$, $A^3$ — gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl.

L. Optisch aktive Dioxolanester der Formel (XIII)

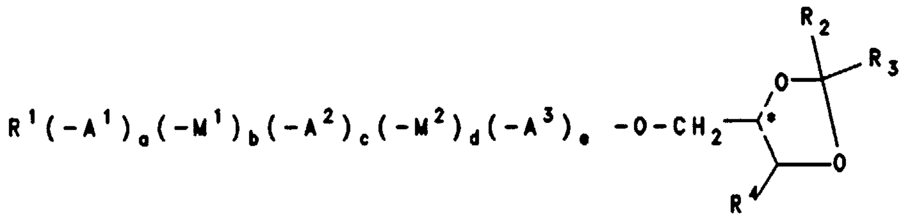

(XIII)

in der bedeuten:

| | |
|---|---|
| $R^1$ | geradkettiger oder verzweigter Alkyrest mit 1 bis 16 bzw. 3 bis 16 C-Atomen, wobei eine oder mehrere nicht benachbarte $-CH_2$ Gruppen durch -O-, -CO-, -O-CO- oder -CO-O- ersetzt sein können |
| $R^2$, $R^3$, $R^4$ | gleich oder verschieden, H oder ein Alkyl- oder Alkenylrest mit 1 bis 10 bzw. 2 bis 10 C-Atomen, wobei $R^2$ und $R^3$ zusammen auch $-(CH_2)_5-$ sein können, |
| $A^1$, $A^2$, $A^3$, | sind gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins. |

Asymmetrische C-Atome des Dioxolanrings können, gleich oder verschieden, R oder S konfiguriert sein. Bevorzugt sind Verbindungen der Formel (XIII) mit

| | |
|---|---|
| $R^1$ | geradkettiger Alkylrest mit 1 bis 14 C-Atomen, wobei auch eine oder zwei nicht benachbarte $-CH_2-$ Gruppen durch -O-, -CO-O-, -O-CO-, oder $-Si(CH_3)_2-$ ersetzt sein können, |
| $R^2$, $R^3$ | $CH_3$ oder zusammen $-(CH_2)_5-$, |
| $R^4$ | H, |
| $A^1$, $A^2$, $A^3$ | gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl. |

M. Makrocyclische Verbindungen der Formel (XIV)

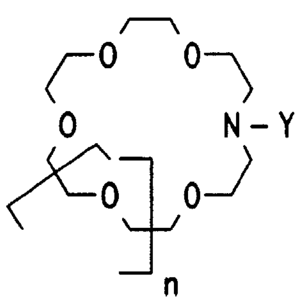

(XIV)

mit

n : 0, 1
y : -CO-(t-Butyl), -CO-(Adamantyl)

Es zeigt sich, daß die erfindungsgemäßen FLC Mischungen die obengenannten Anforderungen an FLC Mischungen besonders gut erfüllen, insbesondere hohe $S_C^*/S_A$ Phasenübergangstemperaturen und einen sehr niedrigen Schmelzpunkt besitzen. Die Mischungen zeichnen sich ferner durch kurze Schaltzeiten, besonders großen Margin und eine sehr gute Orientierbarkeit aus. Diese Mischungen lassen sich nicht nur sehr gut in der Chevron Geometrie betreiben, sondern sind zusätzlich auch für Feldbehandlung geeignet (d.h. zum Betrieb in der Quasi-Bookshelf-Geometrie QBG).

Bevorzugt sind erfindungsgemäße achirale Basismischungen, die neben den Komponenten A, B, C mindestens eine der Komponenten D bis G enthalten. Besonders bevorzugt sind solche Mischungen, die neben den Komponenten A, B, C, 3 bis 4 der Komponenten D bis G, ganz besonders bevorzugt 4 der Komponenten D bis G, enthalten. Insbesondere bevorzugt sind die Komponentenkombinationen:

aa) A + B + C + E
ab) A + B + C + D + E
ac) A + B + C + D + E + F
ad) A + B + C + D + E + F + G

Erfindungsgemäße ferroelektrische Mischungen enthalten neben einer der oben angegebenen Basismischungen mindestes zwei Verbindungen aus den Gruppen H bis L.

Vorzugsweise enthalten solche Mischungen neben mindestens einer der Komponenten H bis L auch die Komponente M.
Besonders bevorzugt sind Mischungen, die neben der Komponente M zwei oder mehr, ganz besonders bevorzugt drei oder mehr, der Komponenten I bis L enthalten.
Insbesondere bevorzugt sind die Kombinationen:

ba) M + I + J
bb) M + I + J + K
bc) M + I + J + L
bd) M + I + J + K + L
be) M + I + J + K + L + H

Vorzugsweise enthalten die erfindungsgemäßen Mischungen folgende Gewichtsmengen der angegebenen Komponenten:

[Die Prozentzahlen sind jeweils Gewichtsprozente, bezogen auf das Gewicht der gesamten Mischung]

A: 5 bis 80 %, vorzugsweise 10 bis 70 %, insbesondere 15 bis 60 %;
B: 1 bis 40 %, vorzugsweise 5 bis 30 %, insbesondere 10 bis 20 %;
C: 1 bis 25 %, vorzugsweise 2 bis 20 %, insbesondere 5 bis 15 %;
D: 0 bis 40 %, vorzugsweise 1 bis 30 %, insbesondere 12 bis 20 %;
E: 0 bis 15 %, vorzugsweise 0 bis 10 %, insbesondere 1 bis 5 %;
F: 0 bis 20 %, vorzugsweise 1 bis 15 %, insbesondere 2 bis 10 %;
G: 0 bis 30 %, vorzugsweise 1 bis 25 %, insbesondere 5 bis 20 %;
H: 0 bis 15 %, vorzugsweise 0 bis 10 %, insbesondere 0 bis 5 %;
I: 0 bis 20 %, vorzugsweise 0,1 bis 15 %, insbesondere 1 bis 10 %;
J: 0 bis 20 %, vorzugsweise 0,1 bis 15 %, insbesondere 1 bis 10 %;
K: 0 bis 10 %, vorzugsweise 0 bis 5 %, insbesondere 0,5 bis 3 %;
L: 0 bis 15 %, vorzugsweise 0,5 bis 10 %, insbesondere 1 bis 5 %;
M: 0 bis 10 %, vorzugsweise 0,1 bis 5 %, insbesondere 0,5 bis 2,5 %;

Die erfindungsgemäßen Mischungen enthalten vorzugsweise 3 bis 30, ferroelektrische 5 bis 30, besonders bevorzugt 5 bis 25, ganz besonders bevorzugt 7 bis 22, insbesondere 10 bis 20 Einzelverbindungen.
Von den Komponenten werden bevorzugt eingesetzt:

A: 4 bis 8 Einzelverbindungen, besonders bevorzugt 5 bis 6 Einzelverbindungen;
B: 1 bis 4 Einzelverbindungen, besonders bevorzugt 1 bis 2 Einzelverbindungen;
C: 1 bis 3 Einzelverbindungen, besonders bevorzugt 1 Einzelverbindung;
D: 0 bis 5 Einzelverbindungen, besonders bevorzugt 1 bis 3 Einzelverbindungen;
E: 0 bis 3 Einzelverbindungen, besonders bevorzugt 0 oder 1 Einzelverbindung;
F: 0 bis 3 Einzelverbindungen, besonders bevorzugt 1 bis 2 Einzelverbindungen;
G: 0 bis 3 Einzelverbindungen, besonders bevorzugt 1 bis 2 Einzelverbindungen;
H: 0 bis 3 Einzelverbindungen, besonders bevorzugt 0 bis 1 Einzelverbindung;
I: 0 bis 4 Einzelverbindungen, besonders bevorzugt 1 bis 2 Einzelverbindungen;
J: 0 bis 4 Einzelverbindungen, besonders bevorzugt 1 bis 2 Einzelverbindungen;

K: 0 bis 3 Einzelverbindungen, besonders bevorzugt 0 bis 1 Einzelverbindung;
L: 0 bis 3 Einzelverbindungen, besonders bevorzugt 0 bis 1 Einzelverbindung;
M: 0 bis 3 Einzelverbindungen, besonders bevorzugt 1 Einzelverbindung;

Neben den Komponenten A bis M können die erfindungsgemäßen Mischungen gegebenenfalls weitere Bestandteile, z.B. Hilfsstoffe, wie Viskositätsminderer, enthalten.

Die einzelnen Komponenten der erfindungsgemäßen Mischungen sind an sich bekannt. Sie sind mit ihrer Herstellung beispielsweise beschrieben in:

A: WO-A 86/06401
B: EP-A 0 541 081
C: EP-A 0 578 054
D: EP-A 0 355 008
E: DE-A 4 243 705
F: WO-A 92/12974
G: Keller et al, Ferroelectrics 58 (1984) 3
H: Keller et al, Ferroelectrics 58 (1984) 3
I: EP-A 0 263 437 (≙ US 4,876,028), DE-A 4 143 139
J: EP-A 0292 954 (≙ US 4,988,459),
K: EP-A 0 351 746
L: EP-A 0 361 272
M: EP-A 0 528 415.

Zur Herstellung der erfindungsgemäßen Mischungen werden beispielsweise die Einzelsubstanzen in der isotropen Phase zusammengerührt und über geeignete Filter von Partikeln und Schwebeteilchen befreit.

Die erfindungsgemäßen Mischungen eignen sich zur Anwendung in allen Bereichen der Optotechnik, beispielsweise in Schalt- und Anzeigeelementen, Lichtventilen und Bauteilen mit NLO-Eigenschaften. Insbesondere eignen sich die erfindungsgemäßen Mischungen dort zum Einsatz, wo die Eigenschaften smektischer Flüssigkristalle genutzt werden.

Da die Mischungen aber im allgemeinen auch nematische Phasen ausbilden ist prinzipiell die Anwendung im Bereich der Nematentechnologie möglich. Achirale Basismischungen können in allen Gebieten, in denen anisotrope Fluide eingesetzt werden, Verwendung finden, beispielsweise als Säulenmaterial für die Gaschromatographie.
Erfindungsgemäße ferroelektrische Mischungen werden bevorzugt in den eingangs ausführlich beschriebenen FLC-Zellen verwendet, die auf Ausnutzung des SSFLC-Effektes (siehe z.B. J.W. Goodby et al., Ferroelectric Liquid Crystals S. 24 ff, Gordon & Breach, Philadelphia 1991) beruhen.
In solchen Zellen werden die erfindungsgemäßen Verbindungen bevorzugt in Kombinationen mit Orientierungsschichten eingesetzt, wie sie beispielsweise in DE-A 42 12 893 oder in der deutschen Patentanmeldung mit dem Titel "Cyclische Strukturelemente enthaltende Silan-Koppler als Orientierungsschichten" vorgeschlagen werden. Dort ist ein Orientierungsfilm für Flüssigkristalle beschrieben, bestehend aus einer quasi monomolekularen Schicht von Verbindungen der Formel

$$C_y - S_p - A_n$$

worin $C_y$ und $S_p$

$C_y$ einen medio- oder makrocyclischen Kohlenstoffring mit 8 oder mehr Ringgliedern, wobei dieser Ring auch anellierte Benzolringe und -O-, -N-, -S-, -Si- und -B- als Heteroatome enthalten kann;
$S_p$ eine Alkylgruppe mit 1 bis 20 Kohlenstoffatomen, bei der eine oder mehrere nicht benachbarte $-CH_2$-Gruppen durch -O-, -S-, -CO-, -O-CO-, -NH-CO-, -O-COO-, -NH-CO-NH-, -NH-CO-O-, $-SO_2-$, $-Si(CH_3)_2-$, -CH=CH- oder -C ≡ C- ersetzt sein können;
$A_n$ Si $X^1X^2X^3$, wobei
$X^1$ eine Einfachbindung und
$X^2$, $X^3$ gleich oder verschieden eine Einfachbindung, eine Alkyl oder eine Alkoxygruppe

ist, wobei die Verbindungen über die Einfachbindungen(en) der Gruppe $A_n$ an eine sauerstoffhaltige Schicht gebunden sind.

Ferner sind die Mischungen für Feldbehandlung, d.h. zum Betrieb in der Quasi-Bookshelf-Geometrie (QBG), (siehe

z.B. H.Rieger et al., SID 91 Digest (Anaheim) 1991, p. 396), geeignet.

Ebenso sind die erfindungsgemäßen Mischungen geeignet für die Verwendung in ferroelektrischen Flüssigkristallanzeigen, die auf Nutzung des DHF-Effekts oder des PSFLCD-Effekts (Pitch Stabilized Ferroelectric Liquid Crystal Display, auch SBF = Short Pitch Bistable Ferroelectric Effect genannt) beruhen. Der DHF-Effekt wird beispielsweise von B.I. Ostrovski in Advances in Liquid Crystal Research and Applications, Oxford/Budapest, 1980, 469 ff. beschrieben, der PSFLCD-Effekt ist beispielsweise in DE-A 3 920 625 und EP-A 0 405 346 beschrieben. Zur Nutzung dieses Effektes wird im Gegensatz zum SSFLC-Effekt ein flüssigkristallines Material mit einem kurzen $S_C$-Pitch benötigt.

Die Erfindung wird durch die Beispiele näher erläutert:

Beispiele

Zur Bestimmung der elektrooptischen Eigenschaften der Mischungen werden selbstgebaute 1-Pixel-Testzellen mit Orientierungsschichten wie oben beschrieben verwendet. Die Schichtdicke des Flüssigkristalls variiert zwischen 1,5 und 2 μm. Das Füllen der Zellen erfolgt durch Kapillarkräfte in der isotropen Phase mit oder ohne Vakuum. Die CPA-Messungen werden mit dem in SPIE 1665, Liquid Crystal Materials, Devices and Applications (1992), vorgestellten elektrischen Ansteuerschema mit einem Bias B = 4:1 durchgeführt. Die Marginmessungen werden mit dem in der gleichen Literaturstelle vorgestellten Ansteuerschema mit einem Bias B = 4:1 durchgeführt, wobei sich der angegebene prozentuale Margin auf die mit gleichem Schema gemessene Schwellenspannung bezieht.

Beispiel 1:

eine Mischung bestehend aus:

Gewichtsanteile

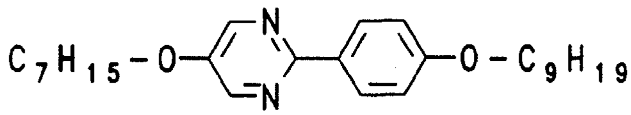

6,37 %

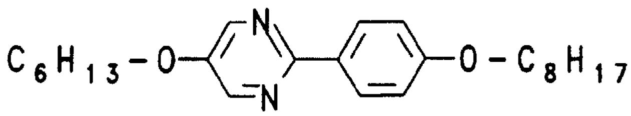

7,19 %

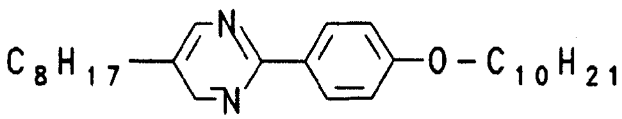

6,94 %

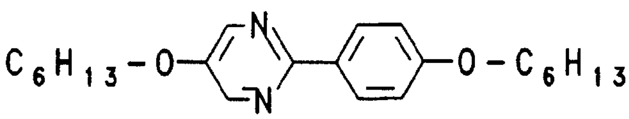

4,99 %

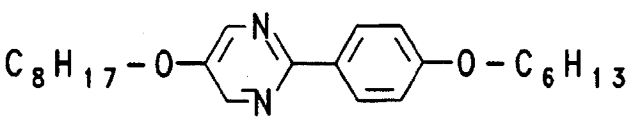

7,19 %

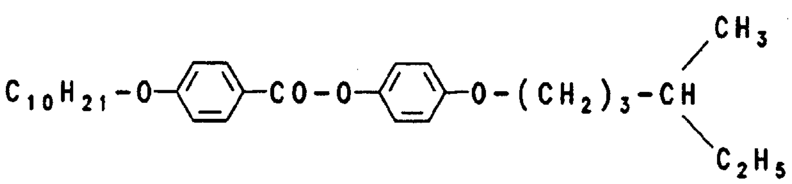

7,66 %

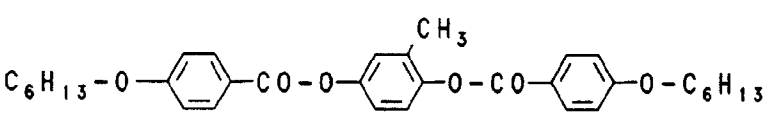

2,47 %

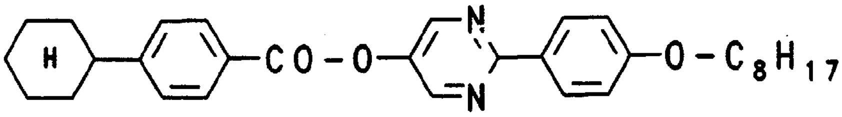

5,67 %

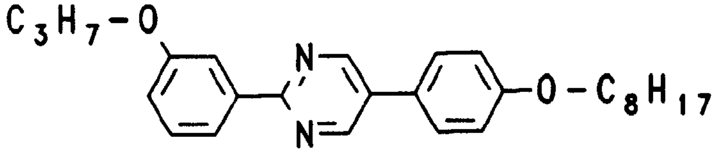

7,83 %

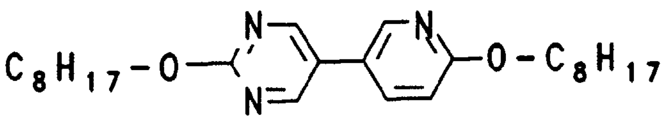

4,82 %

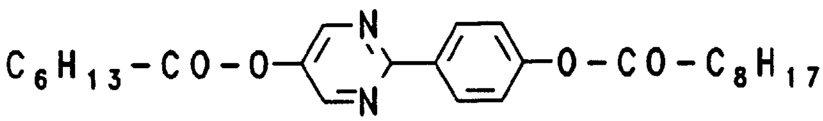

6,17 %

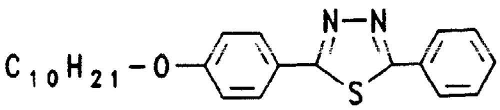

6,45 %

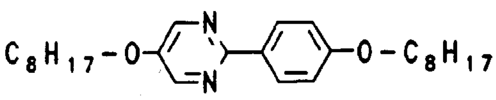

7,71 %

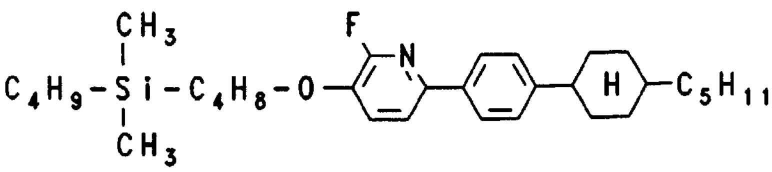

4,86 %

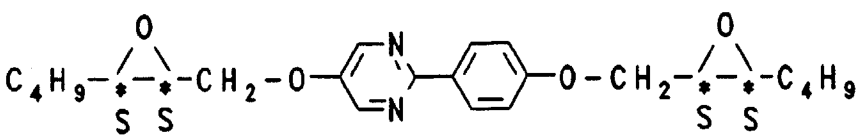

trans

4,90%

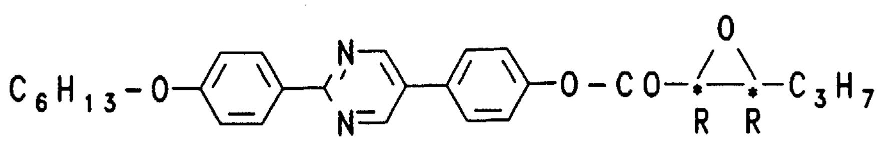

6,56 %

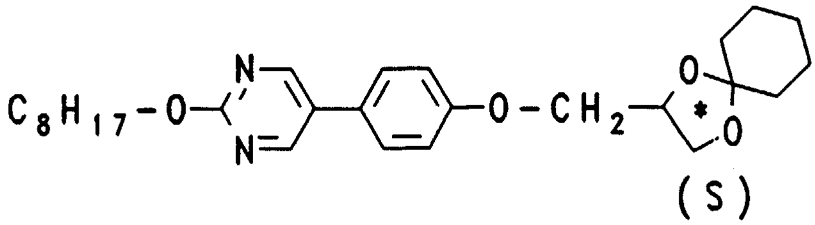

1,62 %

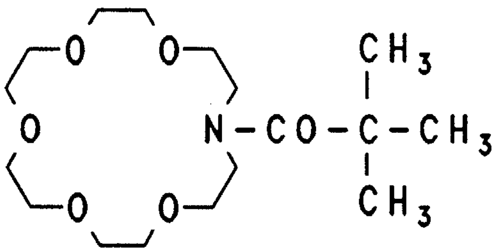

0,58 %

zeigt folgende flüssigkristalline Phasenbereiche:

X -20 $S_C^*$ 70 $S_A$ 86 N* 92 I

Die spontane Polarisation beträgt bei 25°C 47 n C/cm$^2$, die kritische Pulsfläche in der Chevron Geometrie 470 Vs/m. Die Mischung schaltet im Multiplexbetrieb mit 54% Margin und hat ein Kontrastverhältnis von 20:1.

Beispiel 2

Eine Mischung bestehend aus:

| | Gewichtsanteile |
|---|---|
| 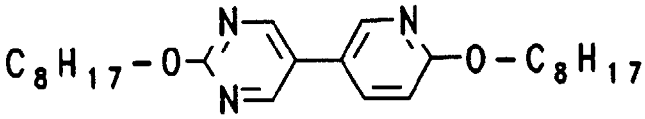 | 4,24 |
| 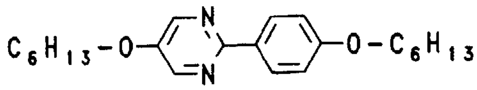 | 3,71 |
| 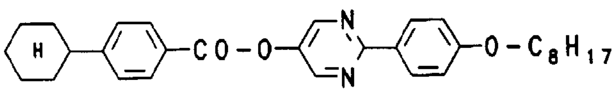 | 6,21 |
| 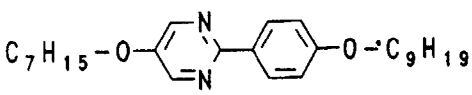 | 6,83 |
| 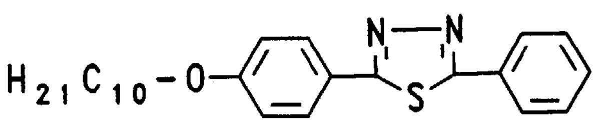 | 7,09 |
| 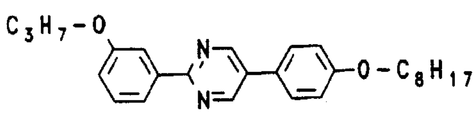 | 8,75 |
| 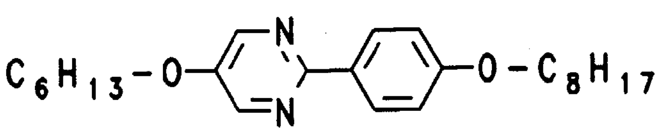 | 7,03 |
| 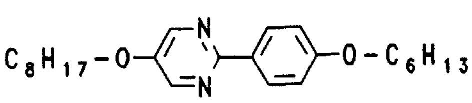 | 7,72 |
| 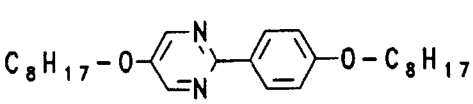 | 8,30 |

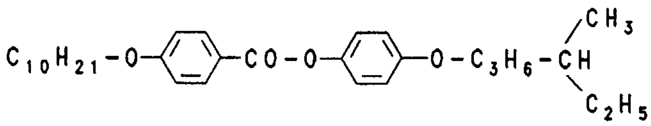 rac 9,62

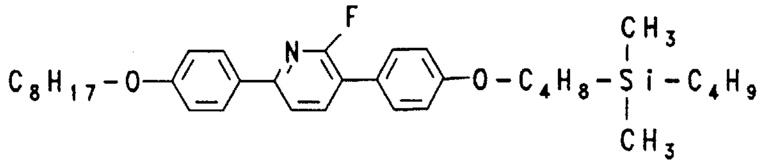 8,67

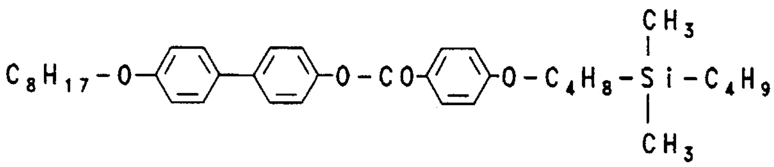 6,14

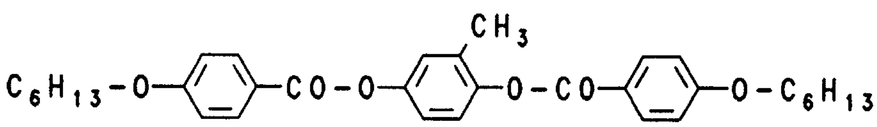 2,72

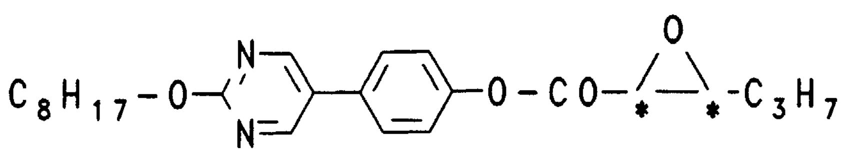 cis 2,41

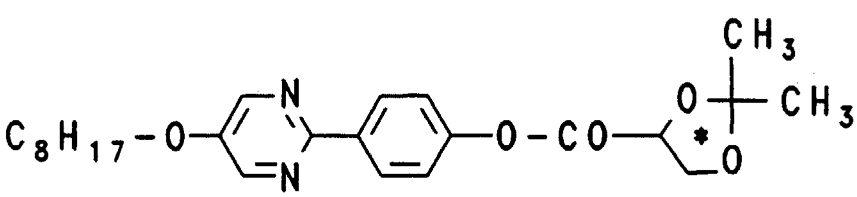 2,34

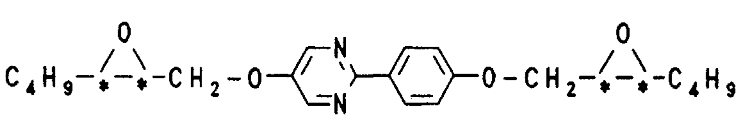 trans 4,89

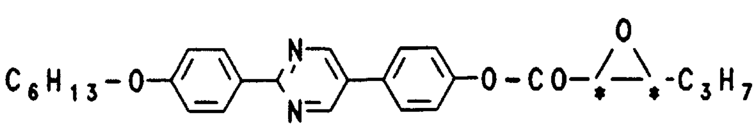 cis 2,55

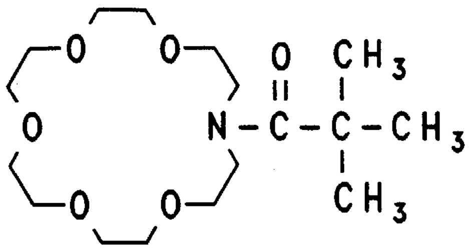

0,78

zeigt folgende flüssigkristalline Phasenbereiche:

X-38 $S_C^*$ 70 $S_A$ 88 N* 96 I

Die spontane Polarisation beträgt bei 25°C 38 nC/cm$^2$, die kritische Pulsfläche in der Chevron-Geometrie 730 Vs/m.

Die Mischung schaltet im Multiplexbetrieb mit 73 % Margin, besitzt einen effektiven Schaltwinkel 2 $\theta_{eff}$ von 26° und hat ein Kontrastverhältnis von 21:1

Beispiel 3

Eine Mischung bestehend aus:

Gewichtsanteile

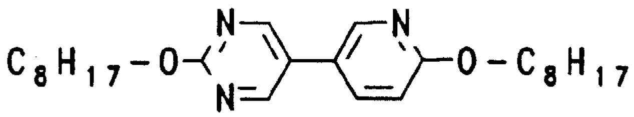

3,98

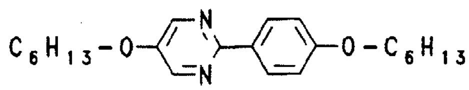

3,49

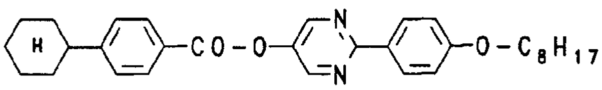

5,84

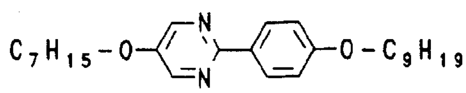

6,42

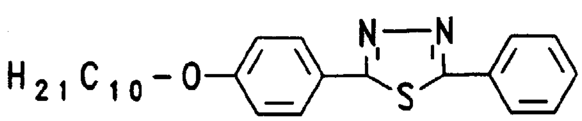

6,66

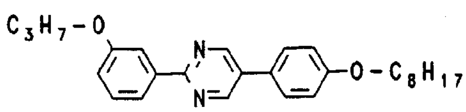

8,22

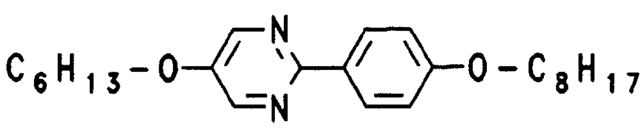

6,61

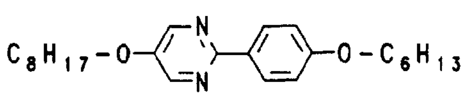

7,25

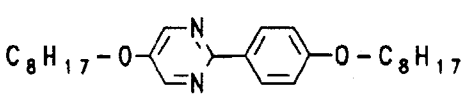

7,80

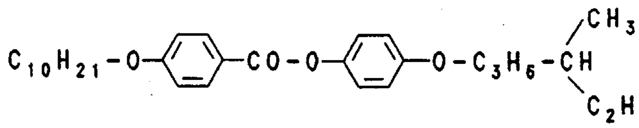 rac 9,04

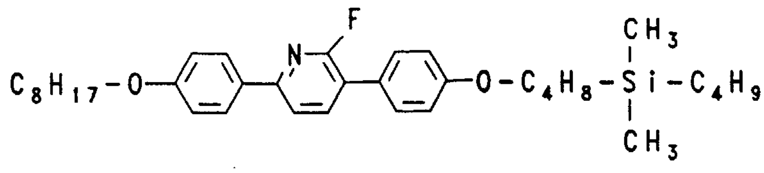 8,15

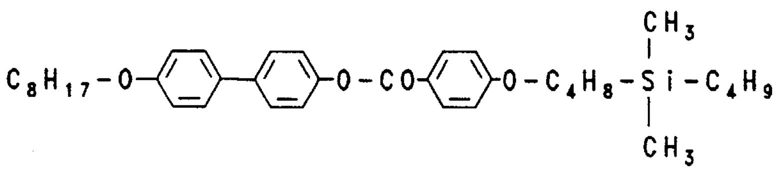 5,77

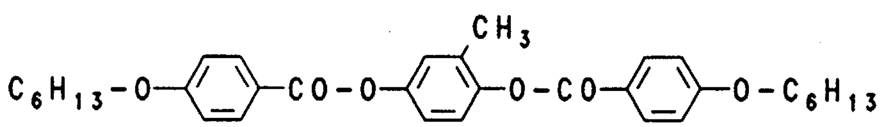 2,56

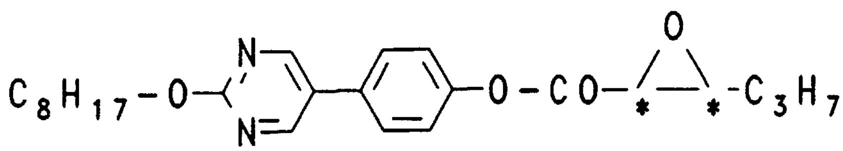 cis 3,45

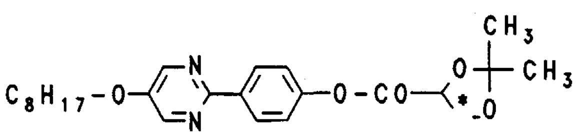 3,35

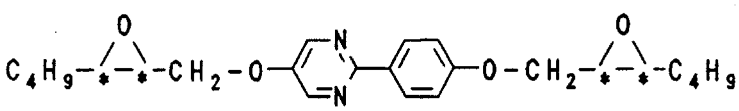 trans 6,98

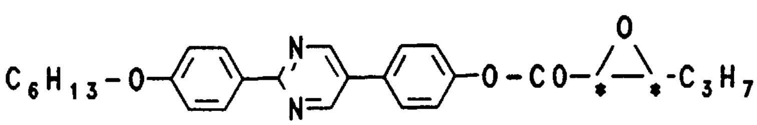 cis 3,65

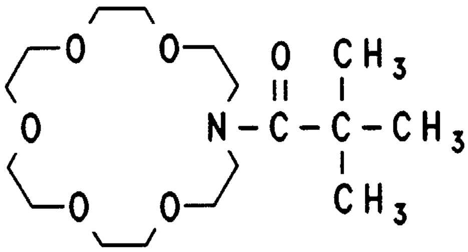

0,78

zeigt folgende flüssigkristalline Phasenbereiche:

X-28 $S_C^*$ 73 $S_A$ 88 N* 96 I

Die spontane Polarisation beträgt bei 25°C 62,5 nC/cm$^2$, die kritische Pulsfläche in der Chevron-Geometrie 550 Vs/m.

Die Mischung schaltet im Multiplexbetrieb mit 48 % Margin, besitzt einen effektiven Schaltwinkel 2 $\theta_{eff}$ von 27° und hat ein Kontrastverhältnis von 17:1.

Beispiel 4

Eine Mischung bestehend aus:

| | Gewichtsanteil |
|---|---|
| 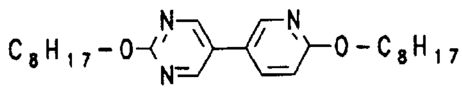 | 4,07 |
| 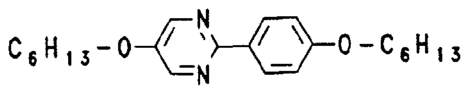 | 3,56 |
| 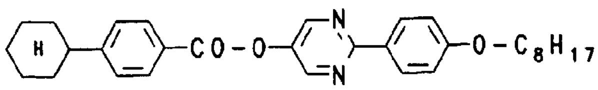 | 5,96 |
| 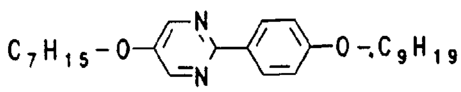 | 6,56 |
| 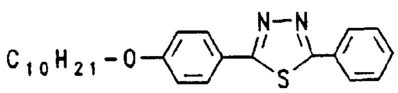 | 6,8 |
| 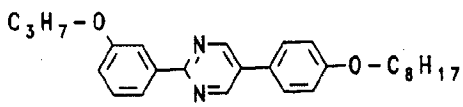 | 8,4 |
| 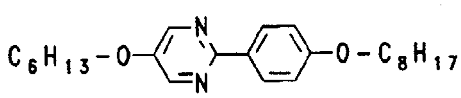 | 6,75 |
| 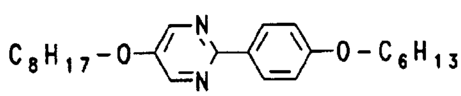 | 7,41 |
| 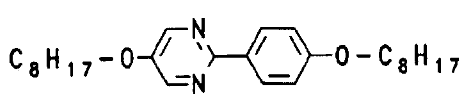 | 7,96 |

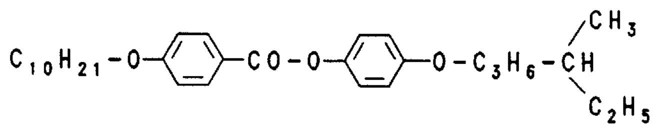 rac 9,23

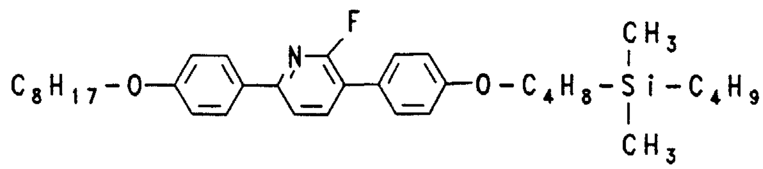 8,32

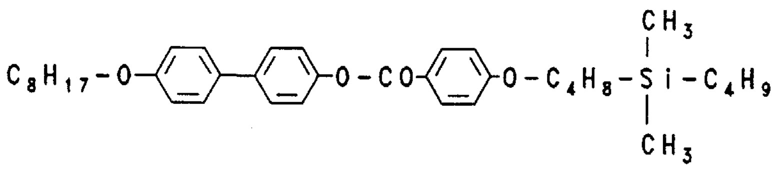 5,89

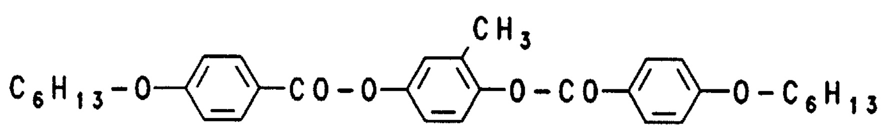 2,61

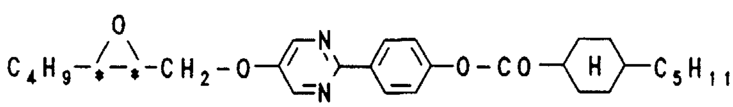 trans 5,25

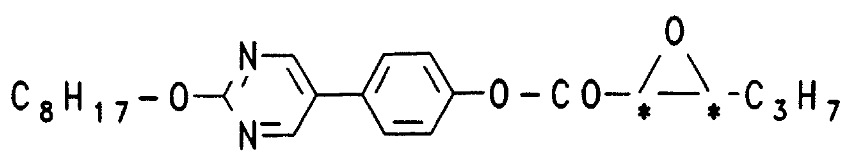 cis 2,59

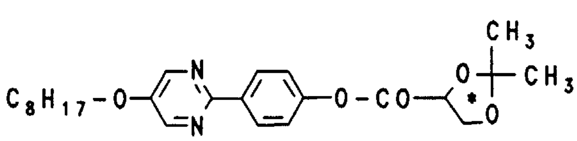 2,51

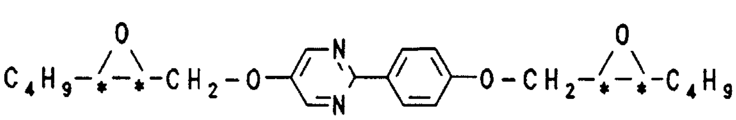 trans 2,61

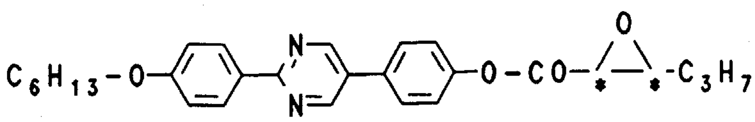 cis 2,74

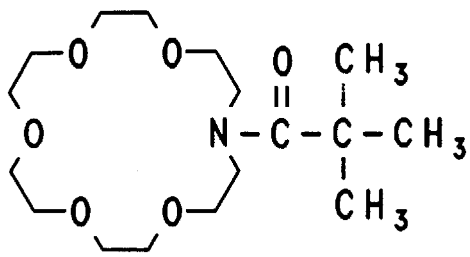 0,78

zeigt folgende flüssigkristalline Phasenbereiche:

X-36 $S_C^*$ 75 $S_A$ 89 N* 100 I

Die spontane Polarisation beträgt bei 25°C 49 nC/cm$^2$, die kritische Pulsfläche in der Chevron-Geometrie 750 Vs/m.

Die Mischung schaltet im Multiplexbetrieb mit 47 % Margin, besitzt einen effektiven Schaltwinkel 2 $\theta_{eff}$ von 27° und hat ein Kontrastverhältnis von 22:1.

Beispiel 5

Eine Mischung bestehend aus:

Gewichtsanteile:

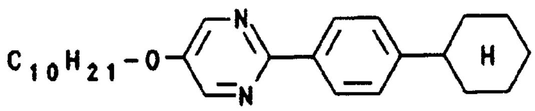

27,19

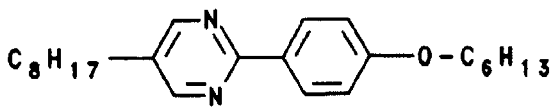

14,57

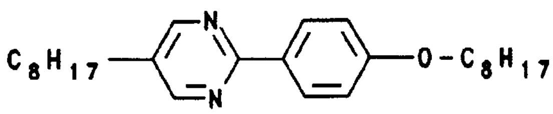

14,07

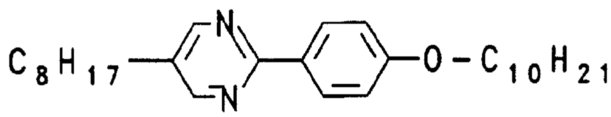

11,17

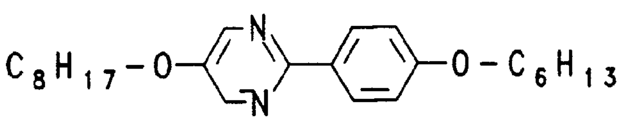

9,48

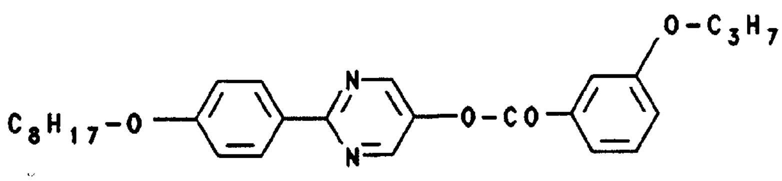

8,06

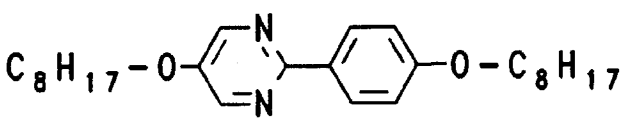

4,66

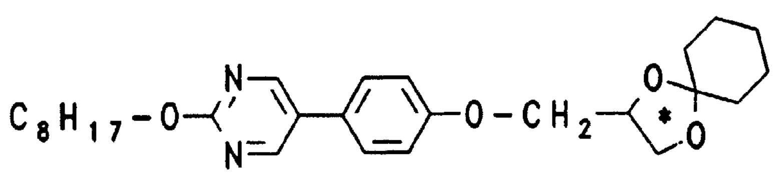

2,63

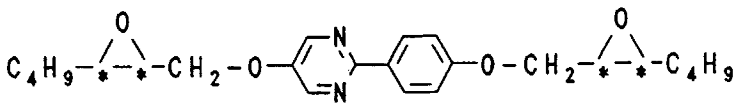 trans 4,5

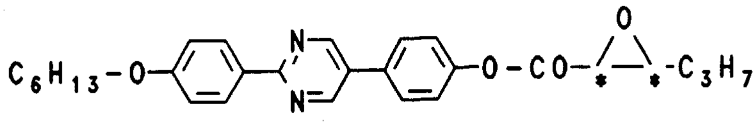 cis 3,27

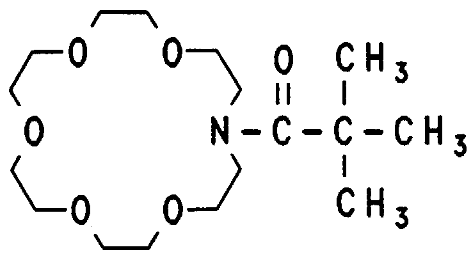 0,4

zeigt folgende flüssigkristalline Phasenbereiche:

X-15 $S_C^*$ 69 $S_A$ 74 N* 80 I

Die spontane Polarisation beträgt bei 25°C 28 nC/cm$^2$, die kritische Pulsfläche in der Chevron-Geometrie 600 Vs/m.

Die Mischung schaltet im Multiplexbetrieb mit 40 % Margin, besitzt einen effektiven Schaltwinkel 2 $\theta_{eff}$ von 29° und hat ein Kontrastverhältnis von 15:1.

Beispiel 6

Eine Mischung bestehend aus:

| | Gewichtsanteile |
|---|---|
| 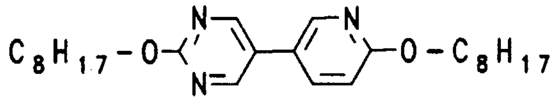 | 4,04 |
| 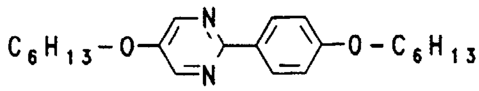 | 3,53 |
| 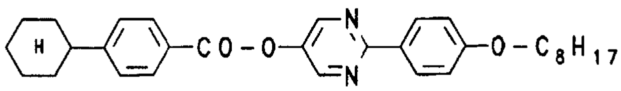 | 5,91 |
| 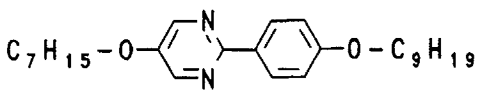 | 6,50 |
| 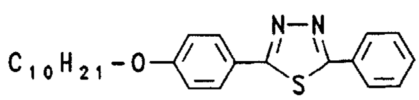 | 6,73 |
| 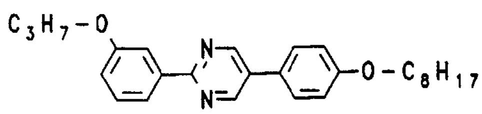 | 6,00 |
| 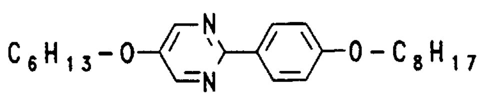 | 6,68 |
| 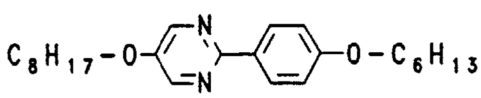 | 7,32 |
| 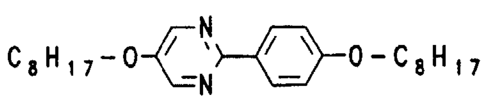 | 7,88 |
| 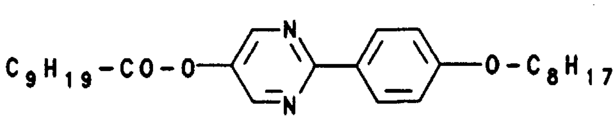 | 7,85 |

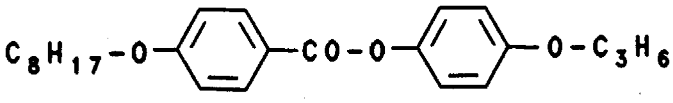

7,50

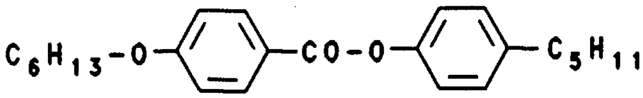

5,35

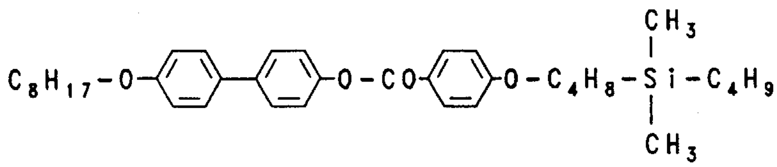

4,98

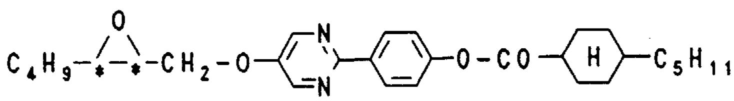

trans

4,00

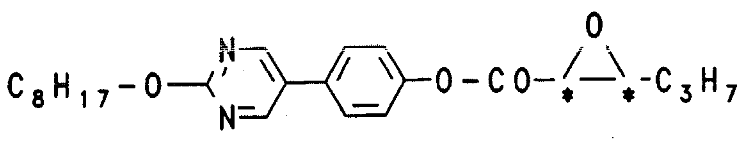

cis

3,45

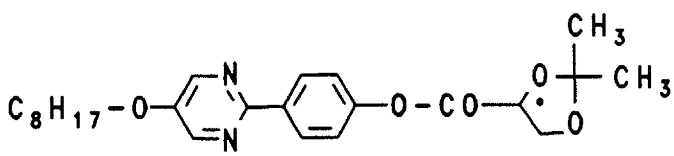

3,35

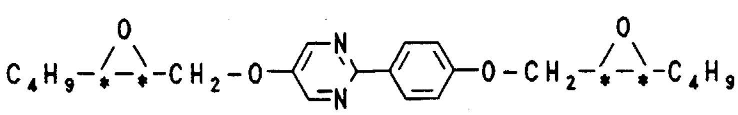

trans

4,5

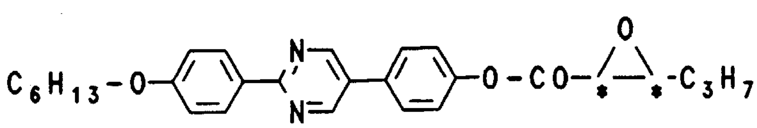

cis

3,65

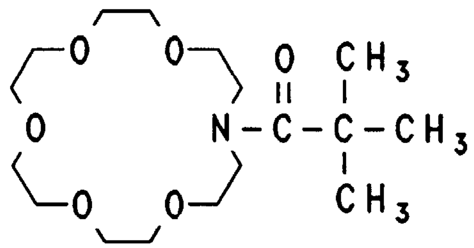

0,78

zeigt folgende flüssigkristalline Phasenbereiche:

X-28 $S_C^*$ 69 $S_A$ 84 N* 95 I

Die spontane Polarisation beträgt bei 25°C 53 nC/cm$^2$, die kritische Pulsfläche in der Chevron-Geometrie 350 Vs/m.

Die Mischung schaltet im Multiplexbetrieb mit 60 % Margin, besitzt einen effektiven Schaltwinkel 2 $\Theta_{eff}$ 25° und hat ein Kontrastverhältnis von 20:1.

Beispiel 7

Eine Mischung bestehend aus:

| | Gewichtsanteile |
|---|---|
| 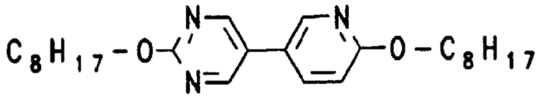 | 4,06 |
| 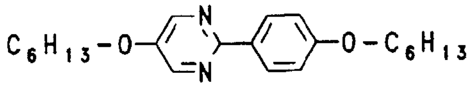 | 3,55 |
| 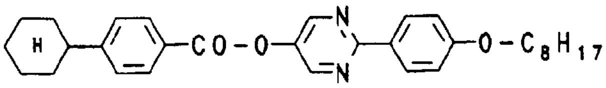 | 5,94 |
| 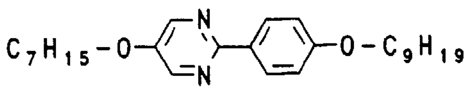 | 6,53 |
| 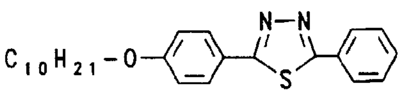 | 6,78 |
| 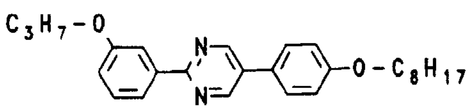 | 8,37 |
| 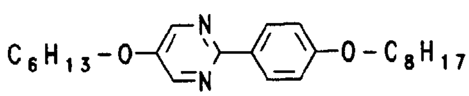 | 6,74 |
| 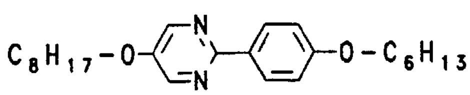 | 7,39 |
| 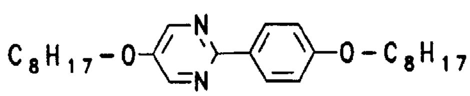 | 7,94 |

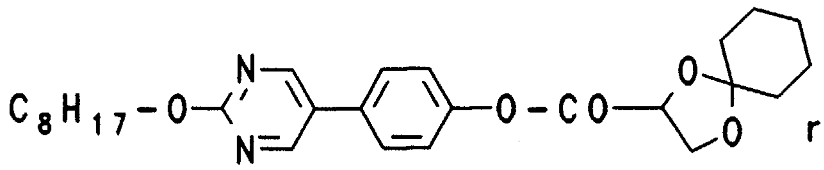 rac 2,00

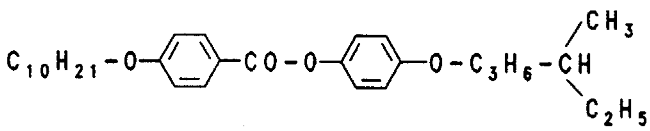 rac 9,20

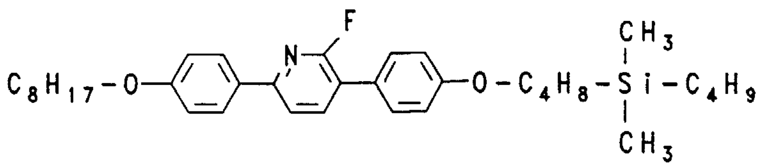 8,30

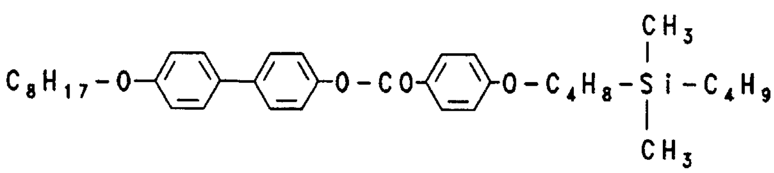 5,88

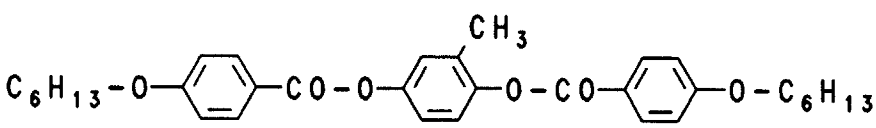 2,60

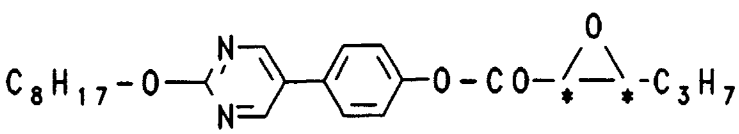 cis 2,76

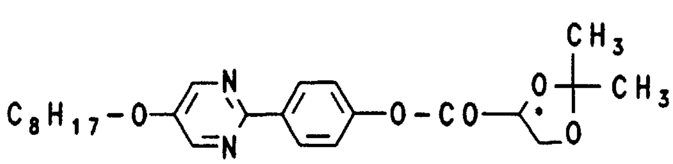 2,68

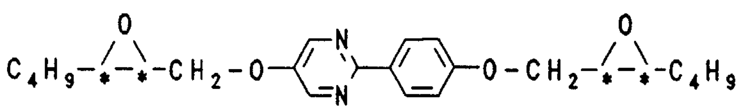 trans 5,58

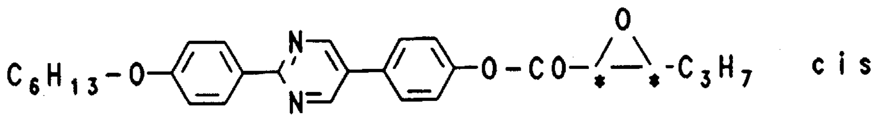

2,92

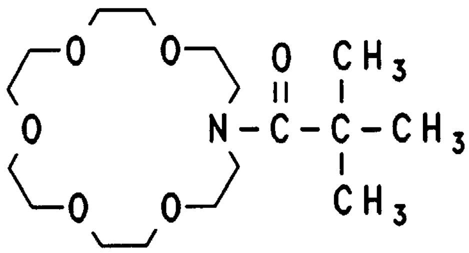

0,78

zeigt folgende flüssigkristalline Phasenbereiche:

X -27 $S_C^*$ 72 $S_A$ 89 N* 95 I

Die spontane Polarisation beträgt bei 25°C 50 nC/cm$^2$, die kritische Pulsfläche in der Chevron-Geometrie 630 Vs/m.

Die Mischung schaltet im Multiplexbetrieb mit 47 % Margin, besitzt einen effektiven Schaltwinkel 2 $\Theta_{eff}$ 27° und hat ein Kontrastverhältnis von 19:1.

Beispiel 8

Eine Mischung bestehend aus:

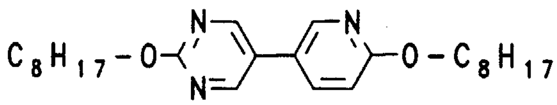

3,66

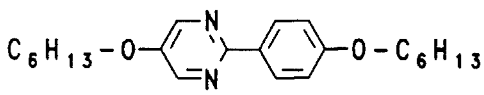

3,20

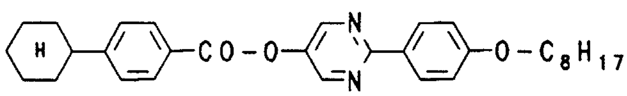

5,36

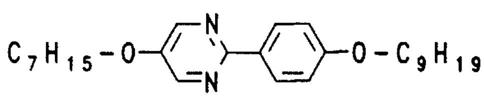

5,89

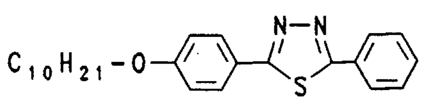

6,11

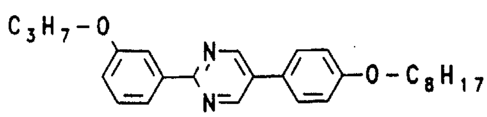

7,55

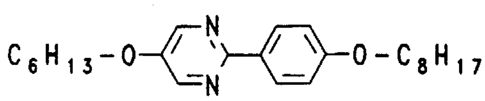

6,07

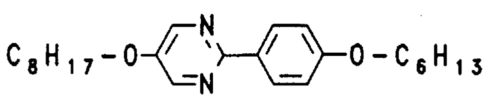

6,65

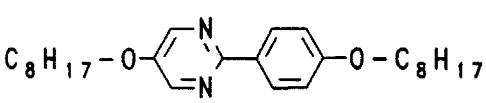

7,15

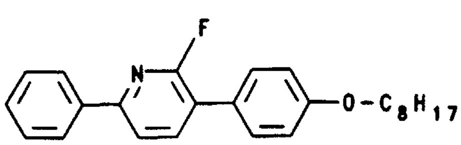

7,12

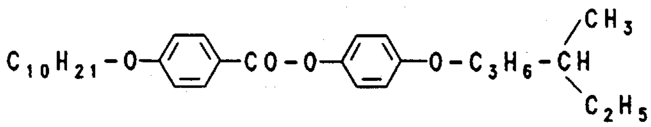 rac 2,29

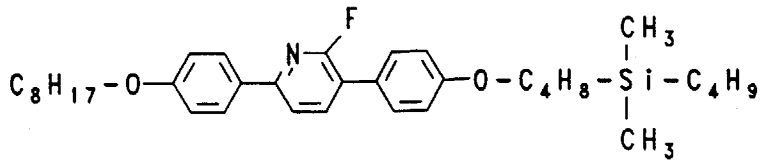 7,47

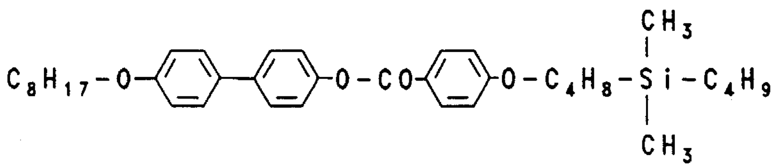 5,30

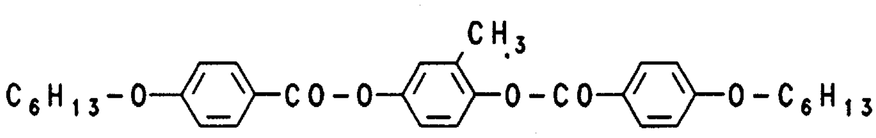 2,35

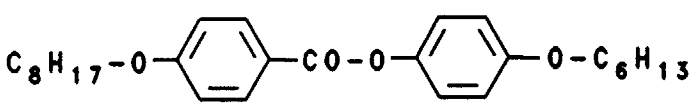 4,86

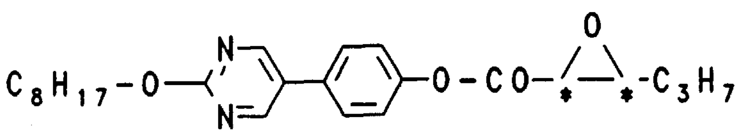 cis 8,41

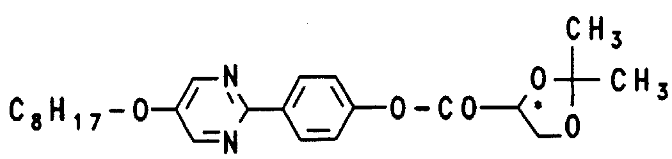 2,34

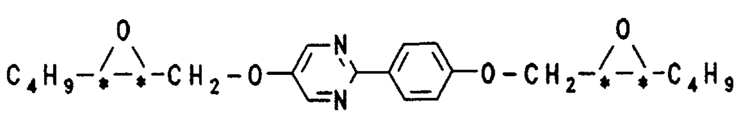 trans 4,89

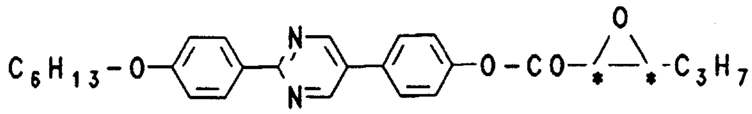 cis

2,55

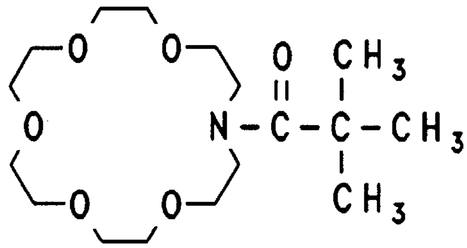

0,78

zeigt folgende flüssigkristalline Phasenbereiche:

X -36 $S_C^*$ 66 $S_A$ 85 N* 94 I

Die spontane Polarisation beträgt bei 25°C 50 nC/$cm^2$, die kritische Pulsfläche in der Chevron-Geometrie 510 Vs/m.

Die Mischung schaltet im Multiplexbetrieb mit 33 % Margin, besitzt einen effektiven Schaltwinkel 2 $\Theta_{eff}$ 25° und hat ein Kontrastverhältnis von 22:1.

Die Beispiele belegen, daß die erfindungsgemäßen Mischungen für die Verwendung in elektrooptischen Schalt- und Anzeigeelementen besonders geeignet sind.

**Patentansprüche**

1. Flüssigkristalline Mischung, enthaltend

A. mindestens eine Verbindung der Formel I

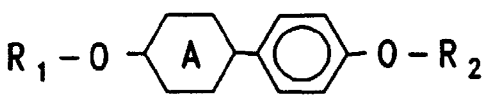 (I)

worin bedeuten:

$R_1$, $R_2$ gleich oder verschieden, eine geradkettige oder verzweigte Alkylgruppe mit 1 bis 18 bzw. 3 bis 18 C-Atomen, wobei eine dem Sauerstoff benachbarte $CH_2$-Gruppe durch -CO ersetzt sein kann,

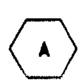 : 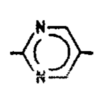 oder 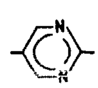

und/oder mindestens eine Verbindung der Formel (II)

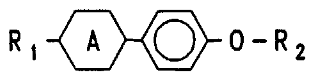 (II)

worin bedeuten:

$R_1, R_2$ gleich oder verschieden, eine verzweigte oder unverzweigte Alkylgruppe mit 1 bis 18 bzw. 3 bis 18 C-Atomen, wobei eine dem Sauerstoff benachbarte $CH_2$-Gruppe auch durch -CO- ersetzt sein kann;

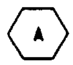 : 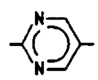 oder 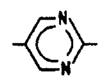 ;

B. mindestens eine Verbindung der Formel (III)

$$R^1(-A^1)_a(-M^1)_b(-A^2)_c(-M^2)_d(-A^3)_e(-M^3)_f(-A^4)\text{-H} \qquad \text{(III)}$$

worin bedeuten:

$R^1$: geradkettiger oder verzweigter Alkylrest mit 1 bis 22 bzw. 3 bis 22 C-Atomen, wobei auch eine oder zwei nicht benachbarte $CH_2$-Gruppen durch -O-, -CO-, -CO-O-, -O-CO-, -O-CO-O- oder $-Si(CH_3)_2$-ersetzt sein können,

$A^1$, $A^2$, $A^3$, $A^4$ gleich oder verschieden, 1,4-Phenylen, wobei ein oder zwei H-Atome durch F oder CN ersetzt sein können, Pyridin-2,5-diyl, bei dem ein oder zwei H-Atome durch F ersetzt sein können, Pyrimidin-2,5-diyl, bei dem ein oder zwei H-Atome durch F ersetzt sein können, trans-1,4-trans-1,4-Cyclohexylen, (1,3,4)-Thiadiazol-2,5-diyl oder Naphthalin-2,6-diyl,

$M^1$, $M^2$, $M^3$ gleich oder verschieden, -CO-O-, -O-CO-, $-CH_2-O-$, $-O-CH_2-$, oder $-CH_2-CH_2-$

a, b, c, d, e, f null oder eins, unter der Bedingung, daß die Summe aus a + c + e 0, 1, 2 oder 3 ist;

C. und mindestens eine Verbindung der Formel (IV)

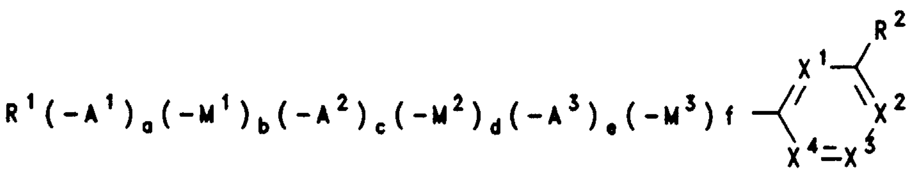 (IV)

worin bedeuten:

$R^1$, $R^2$ gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O-oder $-Si(CH_3)_2$- ersetzt sein können,

$A^1$, $A^2$, $A^3$ gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, und $A^1$ auch

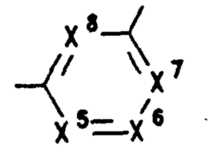

| | |
|---|---|
| $M^1$, $M^2$, $M^3$ | gleich oder verschieden, -O-, -CO-O-, -O-CO-, $-CH_2-O-$, $-O-CH_2-$, $-CH_2-CH_2-$, |
| $X^1$, $X^2$, $X^3$, $X^4$, $X^5$, $X^6$, $X^7$, $X^8$ CH oder N, | wobei die Zahl der N-Atome in einem Sechsring 0, 1 oder 2 beträgt, |
| a, b, c, d, e, f | sind null oder eins, unter der Bedingung, daß die Summe aus a + c + e 0, 1, 2 oder 3 ist. |

**2.** Flüssigkristalline Mischung nach Anspruch 1, dadurch gekennzeichnet, daß als Komponente A solche Verbindungen der Formel (I) und/oder (II) eingesetzt werden, bei denen die Symbole folgende Bedeutungen haben:

$R_1$,$R_2$ gleich oder verschieden, eine geradkettige oder verzweigte Alkylgruppe mit 1 bis 12 bzw. 3 bis 12 C-Atomen, wobei eine dem Sauerstoff benachbarte $CH_2$-Gruppe auch durch -CO- ersetzt sein kann;

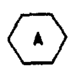 : 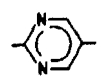 oder 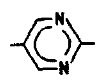 ;

als Komponente B solche Verbindungen der Formel (III) eingesetzt werden, worin bedeuten

| | |
|---|---|
| $R^1$ : | geradkettiger Alkylrest mit 1 bis 14 C-Atomen, wobei auch eine oder zwei nicht benachbarte $-CH_2$-Gruppen durch -O-, -CO-O-, -O-CO-, -O-CO-O- oder $-Si(CH_3)_2-$ ersetzt sein können, |
| $A^1$, $A^2$, $A^3$, $A^4$ | gleich oder verschieden, 1,4-Phenylen, Pyrimidin-2,5-diyl, wobei auch ein oder zwei H-Atome durch F ersetzt sein können; trans-1,4-Cyclohexylen, (1 ,3,4)-Thiadiazol-2,5-diyl; |

und als Komponente C Verbindungen der Formel (IV) eingesetzt werden, worin bedeuten:

| | |
|---|---|
| $R^1$, $R^2$ | geradkettiger Alkylrest mit 1 bis 14 C-Atomen, wobei auch eine oder zwei nicht benachbarte $CH_2$-Gruppen durch -O-, -CO-, -CO-O-, -O-CO-, -O-CO-O- oder $-Si(CH_3)_2-$ ersetzt sein können, |
| $A^1$, $A^2$, $A^3$ | gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl. |

**3.** Flüssigkristalline Mischung nach Anspruch 1 oder 2, dadurch gekennzeichnet, daß sie neben den Komponenten A, B und C mindestens eine Verbindung aus den folgenden Gruppen D bis G enthält:

D. Siliziumverbindungen der Formel (V)

$$R^1(-A^1)_i(-M^1)_k(-A^2)_l(-M^2)_m(-A^3)_n-R^2 \quad (V)$$

worin bedeuten:

| | |
|---|---|
| $R^1$ | geradkettiges oder verzweigtes Alkyl mit 1 bis 22 bzw. 3 bis 22 C-Atomen, wobei auch eine oder zwei nicht benachbarte $CH_2$-Gruppen durch -O-, -CO-, -CO-O-, -O-CO- oder -O-CO-O- ersetzt sein können, |
| $R^2$ | geradkettiges oder verzweigtes Alkyl mit 1 bis 22 bzw. 3 bis 22 C-Atomen, wobei auch eine oder zwei nicht benachbarte $CH_2$-Gruppen durch -O-, -CO-, -CO-O-, -O-CO- oder -O-CO-O- ersetzt sein können, mit der Maßgabe, daß eine, nicht an Sauerstoff gebundene $CH_2$-Gruppe durch $-Si(CH_3)_2-$ ersetzt ist, |

| | |
|---|---|
| $A^1$, $A^2$, $A^3$ | gleich oder verschieden, 1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl, |
| $M^1$, $M^2$, | gleich oder verschieden -CO-O-, -O-CO-, $-CH_2$-F-, $-O-CH_2-$, |
| i, k, l, m, n | null oder 1, mit der Maßgabe, daß i + l + n = 2 oder 3 ist; |

E. Hydrochinonderivate der Formel (VI),

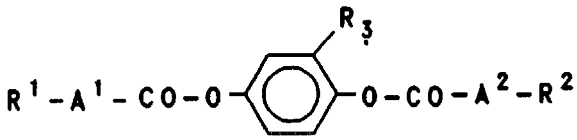

(VI)

wobei bedeuten:

| | |
|---|---|
| $R^1$, $R^2$ | gleich oder verschieden, geradkettiger oder verzweigter Alkylrest mit 1 bzw. 3 bis 16 C-Atomen, wobei auch eine oder zwei nicht benachbarte $CH_2$-Gruppen durch -O-, -CO-, -O-CO-, -CO-O-, -O-CO-O- ersetzt sein können, |
| $R^3$ | $-CH_3$, $-CF_3$ oder $-C_2H_5$, |
| $A^1$, $A^2$ | gleich oder verschieden |

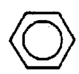 oder 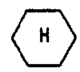 ;

F. Pyridylpyrimidine der Formel (VII),

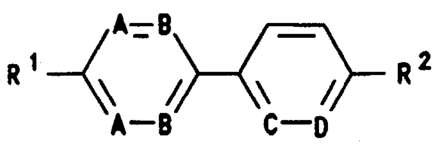

(VII)

wobei bedeuten
A gleich N und B gleich CH oder A gleich CH und B gleich N, C gleich N und D gleich CH oder C gleich CH und D gleich N,
wobei eine oder zwei CH-Gruppen durch CF-Gruppen ersezt sein können,

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $CH_2$-Gruppen durch -O-, -CO-, -CO-O-, -O-CO- oder -O-CO-O- ersetzt sein können, und |

G. Phenylbenzoate der Formel (VIII)

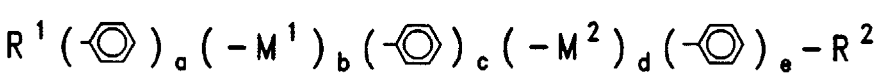

(VIII)

wobei bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, |

| | |
|---|---|
| | -CO-, -CO-O-, -O-CO- oder -O-CO-O- ersetzt sein können, |
| $M^1$, $M^2$ | gleich oder verschieden, -CO-O-, -O-CO-, |
| a, b, c, d, e | null oder eins, unter der Bedingung, daß a + c + e = 2 oder 3 und b + d = 1 oder 2 ist. |

**4.** Flüssigkristalline Mischung nach einem oder mehreren der vorhergehenden Ansprüche, dadurch gekennzeichnet, daß sie mindestens eine Verbindung aus jeder der Gruppen D bis G enthält.

**5.** Ferroelektrische, flüssigkristalline Mischung nach einem oder mehreren der vorhergehenden Ansprüche, dadurch gekennzeichnet, daß sie mindestens zwei optisch aktive Verbindungen aus den folgenden Gruppen H bis L enthält;

H. optisch aktive Phenylbenzoate der Formel (IX)

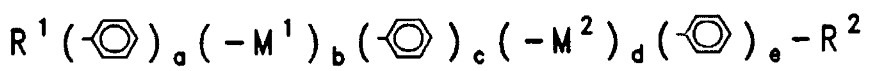 (IX)

wobei bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, und worin wenigstens einer der Reste $R^1$, $R^2$ eine verzweigte, optisch aktive Alkylgruppe ist, |
| $M^1$, $M^2$ | gleich oder verschieden, -CO-O-, -O-CO- oder eine Einfachbindung |
| a, b, c, d, e | null oder eins, unter der Bedingung, daß die Summe aus a + c + e 2 oder 3 ist; b + d = 1 oder 2; |

I. optisch aktive Oxiranether der Formel (X)

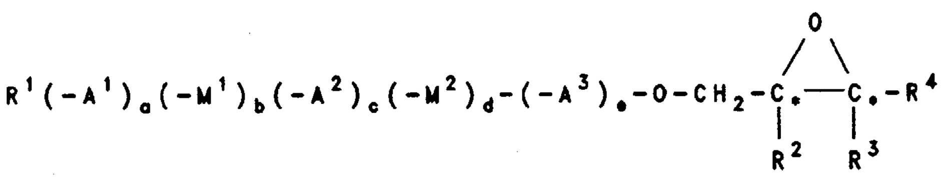 (X)

wobei die Symbole und Indizes folgende Bedeutung haben

| | |
|---|---|
| * | ist ein chirales Zentrum, |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können, |

oder die nachfolgende, optisch aktive Gruppe,

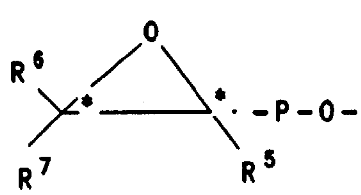

| | |
|---|---|
| $R^2$,$R^3$,$R^4$,$R^5$,$R^6$,$R^7$ | gleich oder verschieden, H oder ein geradkettiger oder verzweigter Alkylrest mit 1 bis 16 C-Atomen, |

| | |
|---|---|
| P | $-CH_2-$ oder -CO-, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins; |

J. optisch aktive Oxiranester der Formel (XI)

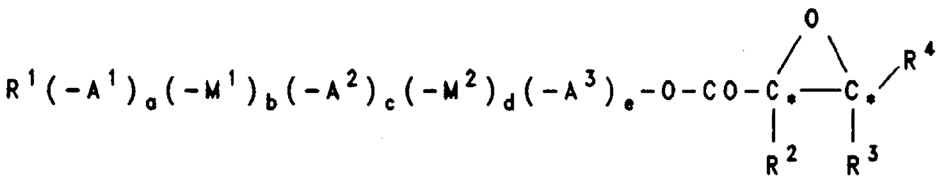

(XI)

wobei die Symbole und Indizes folgende Bedeutung haben

| | |
|---|---|
| * | ein chirales Zentrum, |
| $R^1$ | ein geradkettiger oder verzweigter Alkylrest mit 1 bis 22 bzw. 3 bis 22 C-Atomen, wobei auch eine oder zwei nicht benachbarte $CH_2$-Gruppen durch -O-, -CO-, -CO-O-, -O-CO-, -O-CO-O- oder $-Si(CH_3)_2-$ ersetzt sein können, |
| $R^2$,$R^3$,$R^4$ | gleich oder verschieden, H oder ein geradkettiger oder verzweigter Alkylrest mit 1 bis 16 C-Atomen, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2, 5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins; |

K. optisch aktive Dioxolanether der Formel (XII)

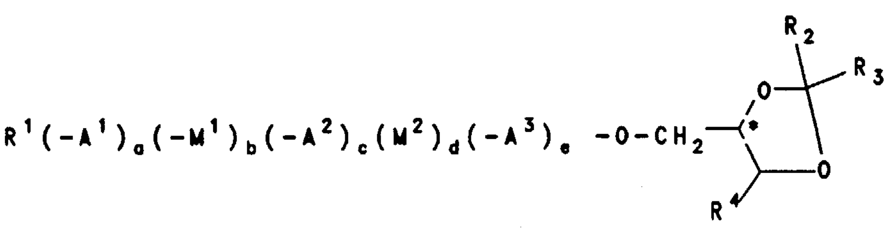

(XII)

wobei die Symbole und Indizes folgende Bedeutung haben

| | |
|---|---|
| * | ein chirales Zentrum, |
| $R^1$ | ein geradkettiger oder verzweigter Alkylrest mit 1 bis 22 bzw. 3 bis 22 C-Atomen, wobei auch eine oder zwei nicht benachbarte $CH_2$-Gruppen durch -O-, -CO-, -CO-O-, -O-CO-, -O-CO-O- oder $-Si(CH_3)_2-$ ersetzt sein können, |
| $R^2$,$R^3$,$R^4$ | gleich oder verschieden, H, ein geradkettiger oder verzweigter Alkylrest mit 1 bis 16 bzw. 3 bis 10 C-Atomen oder ein Alkenylrest mit 2 bis 16 C-Atomen, wobei $R^2$ und $R^3$ zusammen auch $-(CH_2)_5$-sein können, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cy- |

clohexylen, bei dem ein oder zwei H-Atome durch -CN und/oder $-OH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e null oder eins;

L. optisch aktive Dioxolanester der Formel (XIII)

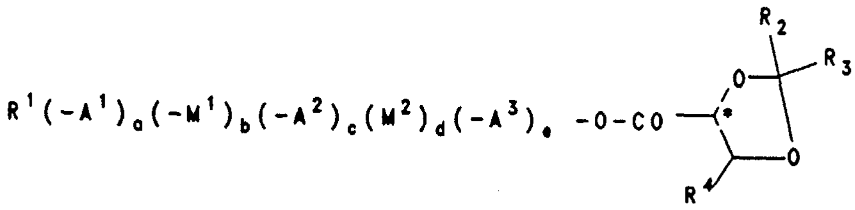

(XIII)

in der bedeuten:

$R^1$ geradkettiger oder verzweigter Alkyrest mit 1 bis 16 bzw. 3 bis 16 C-Atomen, wobei eine oder mehrere nicht benachbarte $CH_2$-Gruppen durch -O-, -CO-, -O-CO- oder -CO-O- ersetzt sein können,

$R^2$, $R^3$, $R^4$ gleich oder verschieden, H oder ein Alkyl- oder Alkenylrest mit 1 bis 10 bzw. 2 bis 10 C-Atomen, wobei $R^2$ und $R^3$ zusammen auch $-(CH_2)_5-$ sein können,

$A^1$, $A^2$, $A^3$ gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, bei dem ein oder zwei H-Atome durch -CN und/oder $-OH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e null oder eins.

**6.** Ferroelektrische, flüssigkristalline Mischung nach Anspruch 5, dadurch gekennzeichnet, daß sie mindestens je eine Verbindung aus drei der Gruppen H bis L enthält.

**7.** Ferroelektrische, flüssigkristalline Mischung nach Anspruch 5 oder 6, dadurch gekennzeichnet, daß sie mindestens eine Verbindung enthält aus der Gruppe M:
M: makrocyclische Verbindungen der Formel (XIV)

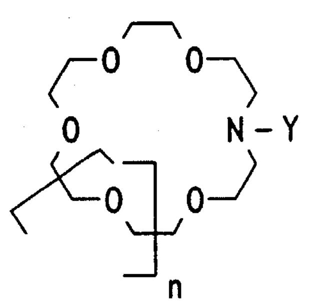

(XIV)

mit

n : 0, 1
y : -CO-(t-Butyl), -CO-(Adamantyl)

**8.** Flüssigkristalline Mischung nach einem oder mehreren der Ansprüche 1 bis 7, dadurch gekennzeichnet, daß der Anteil der einzelnen Komponenten, in Gewichtsprozent, beträgt:

A: 5 bis 80 %,

B: 1 bis 40 %,
C: 1 bis 25 %,
D: 0 bis 40 %,
E: 0 bis 15 %,
F: 0 bis 20 %,
G: 0 bis 30 %,
H: 0 bis 15 %,
I: 0 bis 20 %,
J: 0 bis 20 %,
K: 0 bis 10 %,
L: 0 bis 15 %,
M: 0 bis 10 %.

**9.** Verwendung von flüssigkristallinen Mischungen nach einem oder mehreren der Ansprüche 1 bis 8 in elektrooptischen Schalt- und Anzeigevorrichtungen.

**10.** Elektrooptische Schalt- und Anezigevorrichtung, enthaltend eine flüssigkristalline Mischung nach einem oder mehreren der Ansprüche 1 bis 8.

## Claims

**1.** A liquid-crystalline mixture comprising

A. at least one compound of the formula I

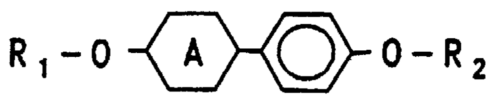

( I )

in which

$R_1$ and $R_2$ are identical or different, straight-chain or branched alkyl groups having 1 to 18 or 3 to 18 carbon atoms respectively, in which a $CH_2$ group adjacent to the oxygen may be replaced by -CO-,

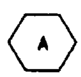 is 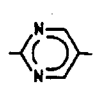 or 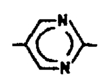

and/or at least one compound of the formula (II)

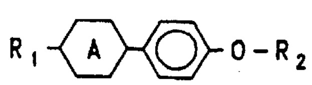

( I I )

in which

$R_1$ and $R_2$ are identical or different, branched or unbranched alkyl groups having 1 to 18 or 3 to 18 carbon atoms respectively, in which a $CH_2$ group adjacent to the oxygen may also be replaced by -CO-, and

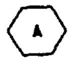 is 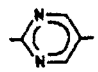 or 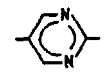 ;

B. at least one compound of the formula (III)

$$R^1(-A^1)_a(-M^1)_b(-A^2)_c(-M^2)_d(-A^3)_e(-M^3)_f(-A^4)\text{-H} \qquad \text{(III)}$$

in which

| | |
|---|---|
| $R^1$ | is a straight-chain or branched alkyl radical having 1 to 22 or 3 to 22 carbon atoms respectively, in which one or two non-adjacent $CH_2$ groups may also be replaced by -O-, -CO-, -CO-O-, -O-CO-, -O-CO-O- or $-Si(CH_3)_2-$, |
| $A^1$, $A^2$, $A^3$ and $A^4$ | are identical or different and are 1,4-phenylene, in which one or two H atoms may be replaced by F or CN, pyridine-2,5-diyl, in which one or two H atoms may be replaced by F, pyrimidine-2,5-diyl, in which one or two H atoms may also be replaced by F, trans-1,4-cyclohexylene, 1,3,4-thiadiazole-2,5-diyl or naphthalene-2,6-diyl; |
| $M^1$, $M^2$ and $M^3$ | are identical or different and are -CO-O-, -O-CO-, $-CH_2-O-$, $-O-CH_2-$ or $-CH_2-CH_2-$, and |
| a, b, c, d, e and f | are zero or one, with the proviso that the sum of a + c + e is 0, 1, 2 or 3; |

C. and at least one compound of the formula (IV)

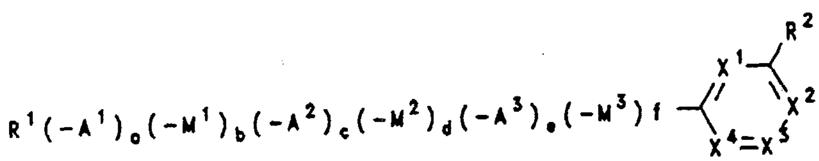 (IV)

in which

| | |
|---|---|
| $R^1$ and $R^2$ | are identical or different, straight-chain or branched alkyl radicals having 1 to 22 or 3 to 22 carbon atoms respectively, in which one or two non-adjacent $-CH_2-$ groups may also be replaced by -O-, -CO-, -CO-O-, -O-CO-, -O-CO-O- or $-Si(CH_3)_2-$, |
| $A^1$, $A^2$ and $A^3$ | are identical or different and are 1,4-phenylene, in which one or two H atoms may be replaced by F, pyridine-2,5-diyl, in which one or two H atoms may be replaced by F, pyrimidine-2,5-diyl, in which one or two H atoms may be replaced by F, trans-1,4-cyclohexylene, in which one or two H atoms may be replaced by -CN and/or $-CH_3$, or 1,3,4-thiadiazole-2,5-diyl, and $A^1$ is alternatively 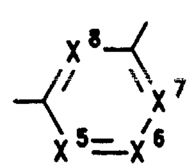 |
| $M^1$, $M^2$ and $M^3$ | are identical or different and are -O-, -CO-O-, -O-CO-, $-CH_2-O-$, $-O-CH_2-$ or $-CH_2-CH_2-$, |
| $X^1$, $X^2$, $X^3$, $X^4$, $X^5$, $X^6$, $X^7$ and $X^8$ | are CH or N, where the number of N atoms in a six-membered |

| | |
|---|---|
| | ring is 0, 1 or 2, and |
| a, b, c, d, e and f | are zero or one, with the proviso that the sum a + c + e is 0, 1, 2 or 3. |

**2.** A liquid-crystalline mixture as claimed in claim 1, wherein component A is a compound of the formula (I) and/or (II) in which the symbols have the following meanings:

$R^1$ and $R^2$ are identical or different, straight-chain or branched alkyl groups having 1 to 12 or 3 to 12 carbon atoms respectively, in which a $CH_2$ group adjacent to the oxygen may also be replaced by -CO-, and

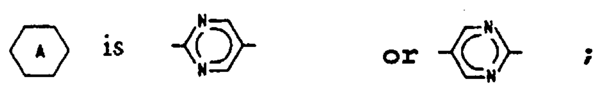

component B is a compound of the formula (III) in which

$R^1$ is a straight-chain alkyl radical having 1 to 14 carbon atoms, in which one or two non-adjacent $-CH_2-$ groups may also be replaced by -O-, -CO-O-, -O-CO-, -O-CO-O- or $-Si(CH_3)_2-$, and
$A^1$, $A^2$, $A^3$ and $A^4$ are identical or different and are 1,4-phenylene, pyrimidine-2,5-diyl, in which one or two H atoms may also be replaced by F, trans-1,4-cyclohexylene or 1,3,4-thiadiazole-2,5-diyl;

and component C is a compound of the formula (IV) in which

$R^1$ and $R^2$ are straight-chain alkyl radicals having 1 to 14 carbon atoms, in which one or two non-adjacent $CH_2$ groups may also be replaced by -O-, -CO-, -CO-O-, -O-CO-, -O-CO-O- or $-Si(CH_3)_2-$, and.
$A^1$, $A^2$ and $A^3$ are identical or different and are 1,4-phenylene, pyrimidine-2,5-diyl, in which one or two H atoms may also be replaced by F, trans-1,4-cyclohexylene or 1,3,4-thiadiazole-2,5-diyl.

**3.** A liquid-crystalline mixture as claimed in claim 1 or 2, which contains, in addition to components A, B and C, at least one compound from groups D to G below:

D. silicon compounds of the formula (V)

$$R^1(-A^1)_i(-M^1)_k(-A^2)_l(-M^2)_m(-A^3)_n-R^2 \qquad (V)$$

in which

| | |
|---|---|
| $R^1$ | is straight-chain or branched alkyl having 1 to 22 or 3 to 22 carbon atoms respectively, in which one or two non-adjacent $CH_2$ groups may also be replaced by -O-, -CO-, -CO-O-, -O-CO- or -O-CO-O-, |
| $R^2$ | is straight-chain or branched alkyl having 1 to 22 or 3 to 22 carbon atoms respectively, in which one or two non-adjacent $CH_2$ groups may also be replaced by -O-, -CO-, -CO-O-, -O-CO- or -O-CO-O-, with the proviso that one $CH_2$ group not bonded to oxygen has been replaced by $-Si(CH_3)_2-$, |
| $A^1$, $A^2$ and $A^3$ | are identical or different and are 1,4-phenylene, in which one or two H atoms may be replaced by F, trans-1,4-cyclohexylene, pyridine-2,5-diyl, in which one or two H atoms may be replaced by F, pyrimidine-2,5-diyl, in which one or two H atoms may be replaced by F, or 1,3,4-thiadiazole-2,5-diyl, |
| $M^1$ and $M^2$ | are identical or different and are -CO-O-, -O-CO-, $-CH_2-O-$ or $-O-CH_2-$, and |
| i, k, l, m and n | are zero or 1, with the proviso that i + l + n = 2 or 3; |

E. hydroquinone derivatives of the formula (VI)

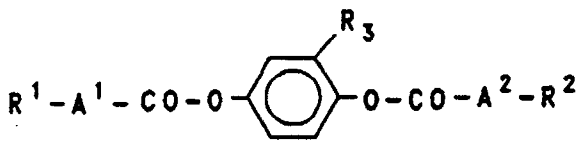

(VI)

in which

R¹ and R² — are identical or different, straight-chain or branched alkyl radicals having 1 or 3 to 16 carbon atoms respectively, in which one or two non-adjacent $CH_2$ groups may also be replaced by -O-, -CO-, -O-CO-, -CO-O- or -O-CO-O-,

$R^3$ — is $-CH_3$, $-CF_3$ or $-C_2H_5$,

$A^1$ and $A^2$ are identical or different and are

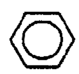 or 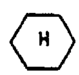 ;

F. pyridylpyrimidines of the formula (VII)

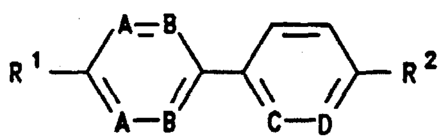

(VII)

in which
A is N and B is CH or A is CH and B is N, C is N and D is CH or C is CH and D is N, in which one or two CH groups may be replaced by CF groups, and

$R^1$ and $R^2$ — are identical or different, straight-chain or branched alkyl radicals having 1 to 22 or 3 to 22 carbon atoms respectively, in which one or two non-adjacent $CH_2$ groups may also be replaced by -O-, -CO-, -CO-O-, -O-CO- or -O-CO-O-; and

G. phenylbenzoates of the formula (VIII)

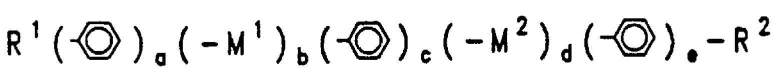

(VIII)

in which

| | |
|---|---|
| $R^1$ and $R^2$ | are identical or different, straight-chain or branched alkyl radicals having 1 to 22 or 3 to 22 carbon atoms respectively, in which one or two non-adjacent $-CH_2-$ groups may also be replaced by -O-, -CO-, -CO-O-, -O-CO- or -O-CO-O-, |
| $M^1$ and $M^2$ | are identical or different and are -CO-O- or -O-CO-, and |
| a, b, c, d and e | are zero or one, with the proviso that a + c + e = 2 or 3 and b + d = 1 or 2. |

**4.** A liquid-crystalline mixture as claimed in one or more of the preceding claims, which contains at least one compound from each of groups D to G.

**5.** A ferroelectric, liquid-crystalline mixture as claimed in one or more of the preceding claims, which contains at least two optically active compounds from groups H to L below:

H. optically active phenylbenzoates of the formula (IX)

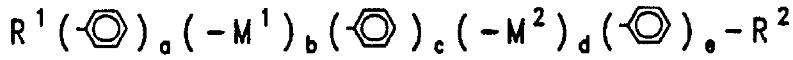 (IX)

in which

$R^1$ and $R^2$ are identical or different, straight-chain or branched alkyl radicals having 1 to 22 or 3 to 22 carbon atoms respectively, in which one or two non-adjacent $-CH_2-$ groups may also be replaced by -O-, -CO-, -CO-O-, -O-CO- or -O-CO-O-, and in which at least one of the radicals $R^1$ and $R^2$ is a branched, optically active alkyl group,

$M^1$ and $M^2$ are identical or different and are -CO-O-, -O-CO- or a single bond, and

a, b, c, d and eare zero or one, with the proviso that the sum a + c + e is 2 or 3 and b + d is 1 or 2;

I. optically active oxirane ethers of the formula (X)

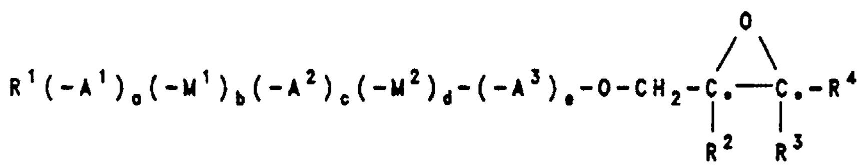 (X)

in which the symbols and indices have the following meanings:

* is a chiral center,

$R^1$ is a straight-chain or branched alkyl radical having 1 to 22 or 3 to 22 carbon atoms respectively, in which one or two non-adjacent $-CH_2-$ groups may also be replaced by -O-, -CO-, -CO-O-, -O-CO-, -O-CO-O- or $-Si(CH_3)_2-$, or the following optically active group:

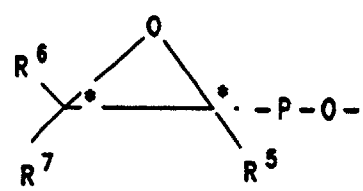

$R^2$, $R^3$, $R^4$, $R^5$, $R^6$ and $R^7$are identical or different and are H or a straight-chain or branched alkyl radical having 1 to 16 carbon atoms,

P is $-CH_2-$ or -CO-,

$A^1$, $A^2$ and $A^3$ are identical or different and are 1,4-phenylene, in which one or two H atoms may be replaced by F, pyridine-2,5diyl, in which one or two H atoms may each be replaced by F, pyrimidine-2,5-diyl, in which one or two H atoms may be replaced by F, trans-1,4-cyclohexylene, in which one or two H atoms may be replaced by -CN and/or $-CH_3$, or 1,3,4-thiadiazole-2,5-diyl,

$M^1$ and $M^2$ are identical or different and are -CO-O-, -O-CO-, $-CH_2-O-$, $-O-CH_2-$ or $-CH_2-CH_2-$, and

a, b, c, d and e are zero or one;

J. optically active oxirane esters of the formula (XI)

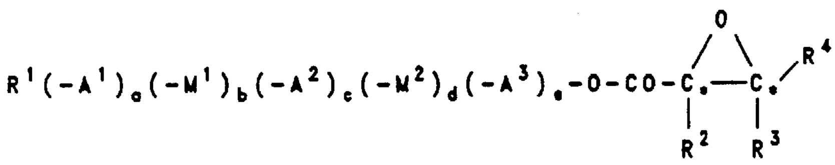

(XI)

where the symbols and indices have the following meanings:

| | |
|---|---|
| * | is a chiral center |
| $R^1$ | is a straight-chain or branched alkyl radical having 1 to 22 or 3 to 22 carbon atoms respectively, in which one or two non-adjacent $CH_2$ groups may also be replaced by -O-, -CO-, -CO-O-, -O-CO-, -O-CO-O- or $-Si(CH_3)_2-$, |
| $R^2$, $R^3$ and $R^4$ | are identical or different and are H or a straight-chain or branched alkyl radical having 1 to 16 carbon atoms, |
| $A^1$, $A^2$ and $A^3$ | are identical or different and are 1,4-phenylene, in which one or two H atoms may be replaced by F, pyridine-2,5-diyl, in which one or two H atoms may be replaced by F, pyrimidine-2,5-diyl, in which one or two H atoms may be replaced by F, trans-1,4-cyclohexylene, in which one or two H atoms may be replaced by -CN and/or $-CH_3$, or 1,3,4-thiadiazole-2,5-diyl, |
| $M^1$ and $M^2$ | are identical or different and are -CO-O-, -O-CO-, $-CH_2-O-$, $-O-CH_2-$ or $-CH_2-CH_2-$, |
| a, b, c, d and e | are zero or one; |

K. optically active dioxolane ethers of the formula (XII)

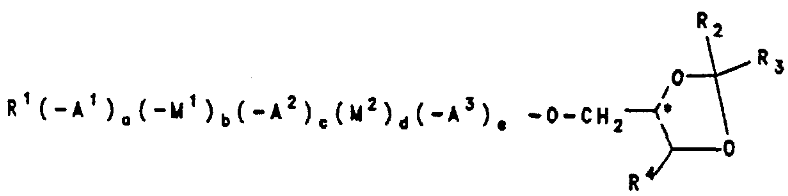

(XII)

where the symbols and indices have the following meanings:

| | |
|---|---|
| * | is a chiral center, |
| $R^1$ | is a straight-chain or branched alkyl radical having 1 to 22 or 3 to 22 carbon atoms respectively, in which one or two non-adjacent $CH_2$ groups may also be replaced by -O-, -CO-, -CO-O-, -O-CO-, -O-CO-O- or $-Si(CH_3)_2-$, |
| $R^2$, $R^3$ and $R^4$ | are identical or different and are H, a straight-chain or branched alkyl radical having 1 to 16 or 3 to 10 carbon atoms respectively or an alkenyl radical having 2 to 16 carbon atoms, where $R^2$ and $R^3$ together may alternatively be - $(CH_2)_5-$, |

$A^1$, $A^2$ and $A^3$ are identical or different and are 1,4-phenylene, in which one or two H atoms may be replaced by F, pyridine-2,5-diyl, in which one or two H atoms may be replaced by F, pyrimidine-2,5-diyl, in which one or two H atoms may be replaced by F, trans-1,4-cyclohexylene, in which one or two H atoms may be replaced by -CN and/or $-CH_3$, or 1,3,4-thiadiazole-2,5diyl,

| | |
|---|---|
| $M^1$ and $M^2$ | are identical or different and are -CO-O-, -O-CO-, $-CH_2-O-$, $-O-CH_2-$ or $-CH_2-CH_2-$, and |
| a, b, c, d and e | are zero or one; |

L. optically active dioxolane esters of the formula (XIII)

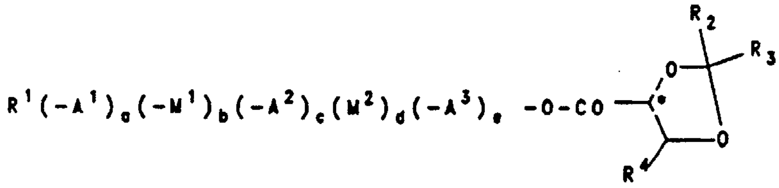

(XIII)

in which

| | |
|---|---|
| $R^1$ | is a straight-chain or branched alkyl radical having 1 to 16 or 3 to 16 carbon atoms respectively, in which one or more non-adjacent $CH_2$ groups may be replaced by -O-, -CO-, -O-CO- or -CO-O-, |
| $R^2$, $R^3$ and $R^4$ | are identical or different and are H, an alkyl radical or an alkenyl radical having 1 to 10 or 2 to 10 carbon atoms respectively, where $R^2$ and $R^3$ together may alternatively be -$(CH_2)_5$-, |
| $A^1$, $A^2$ and $A^3$ | are identical or different and are . 1,4-phenylene, in which one or two H atoms may be replaced by F, pyridine-2,5-diyl, in which one or two H atoms may be replaced by F, pyrimidine-2,5-diyl, in which one or two H atoms may be replaced by F, trans-1,4-cyclohexylene, in which one or two H atoms may be replaced by -CN and/or -$CH_3$, or 1,3,4-thiadiazole-2,5-diyl, |
| $M^1$ and $M^2$ | are identical or different and are -CO-O-, -O-CO-, -$CH_2$-O-, -O-$CH_2$- or -$CH_2$-$CH_2$-, and |
| a, b, c, d and e | are zero or one. |

**6.** A ferroelectric, liquid-crystalline mixture as claimed in claim 5, which contains at least one compound from each of three of groups H to L.

**7.** A ferroelectric, liquid-crystalline mixture as claimed in claim 5 or 6, which contains at least one compound from group M:
M: macrocyclic compounds of the formula (XIV)

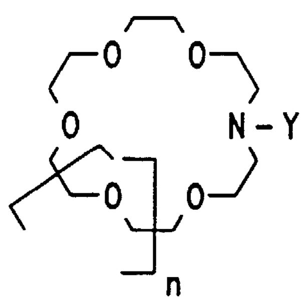

(XIV)

where

n is 0 or 1, and
y is -CO-(t-butyl) or -CO-(adamantyl).

**8.** A liquid crystalline mixture as claimed in one or more of claims 1 to 7, wherein the proportions of the individual components, in percent by weight, are:

A: 5 to 80%,
B: 1 to 40%,
C: 1 to 25%
D: 0 to 40%,
E: 0 to 15%,
F: 0 to 20%,
G: 0 to 30%,

H: 0 to 15%,
I: 0 to 20%,
J: 0 to 20%,
K: 0 to 10%,
L: 0 to 15%,
M: 0 to 10%.

**9.** The use of a liquid-crystalline mixture as claimed in one or more of claims 1 to 8 in electro-optical switching and display devices.

**10.** An electro-optical switching and display device containing a liquid-crystalline mixture as claimed in one or more of claims 1 to 8.

## Revendications

**1.** Mélange cristallin liquide, contenant

A. au moins un composé de formule (I)

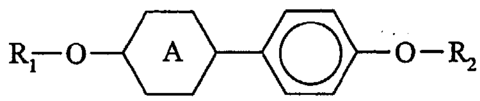 (I)

dans laquelle

$R_1$, $R_2$ sont identiques ou différents et représentent un groupe alkyle linéaire ou ramifié de 1 à 18, respectivement 3 à 18 atomes de carbone, dans lequel un groupe $CH_2$ adjacent à l'atome d'oxygène peut être remplacé par CO,

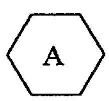 est 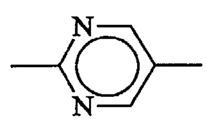 ou 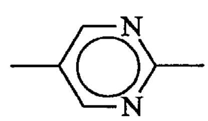

et/ou au moins un composé de formule (II)

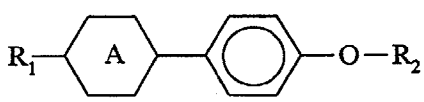 (II)

dans laquelle

$R_1$, $R_2$ sont identiques ou différents et représentent un groupe alkyle linéaire ou ramifié de 1 à 18, respectivement 3 à 18 atomes de carbone, dans lequel un groupe $CH_2$ adjacent à l'atome d'oxygène peut être remplacé par CO,

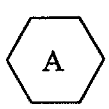 est 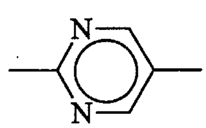 ou 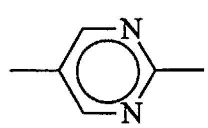 ;

B. au moins un composé de formule (III)

$$R^1\text{-}(\text{-}A^1)_a(\text{-}M^1)_b(\text{-}A^2)_c(\text{-}M^2)_d(\text{-}A^3)_e(\text{-}M^3)_f(\text{-}A^4)\text{-}H \qquad \text{(III)}$$

dans laquelle

| | |
|---|---|
| $R^1$ | représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO-, -O-CO-O-ou $-Si(CH_3)_2-$, |
| $A^1$, $A^2$, $A^3$ et $A^4$ | sont identiques ou différents et représentent un groupe 1,4-phénylène dans lequel un ou deux atomes d'hydrogène peuvent être remplacés par F ou CN, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F, un groupe trans-1,4-cyclohexylène, un groupe (1,3,4)-thiadiazole-2,5-diyle ou un groupe naphtalène-2,6-diyle, |
| $M^1$, $M^2$, $M^3$ | sont identiques ou différents et représentent un groupe -CO-O-, -O-CO-, $-CH_2-O-$, $-O-CH_2-$ ou $-CH_2-CH_2-$, |
| a, b, c, d, e et f | sont égaux à 0 ou 1, à condition que la somme a + c + e soit égale à 0, 1, 2 ou 3; |

C. et au moins un composé de formule (IV)

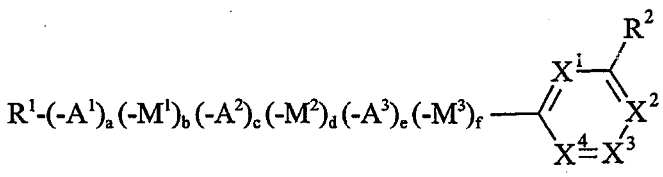

(IV)

dans laquelle

| | |
|---|---|
| $R^1$, $R^2$ | sont identiques ou différents et représentent un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO-, -O-CO-O- ou $-Si(CH_3)_2-$, |
| $A^1$, $A^2$ et $A^3$ | sont identiques ou différents et représentent un groupe 1,4-phénylène dans lequel un ou deux atomes d'hydrogène peuvent être remplacés par F, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F, un groupe trams-1,4-cyclohexylène dans lequel 1 ou 2 atomes d'hydrogène peuvent être remplacés par -CN et/ou $-CH_3$, ou un groupe (1,3,4)-thiadiazole-2,5-diyle et $A^1$ peut aussi être un groupe 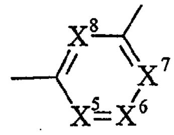 |
| $M^1$, $M^2$, $M^3$ | sont identiques ou différents et représentent un |

| | |
|---|---|
| | groupe -O-, -CO-O-, -O-CO-, $-CH_2-O-$, $-O-CH_2-$ ou $-CH_2-CH_2-$, |
| $X^1$, $X^2$, $X^3$, $X^4$, $X^5$, $X^6$, $X^7$, $X^8$ | sont CH ou N, le nombre d'atomes d'azote d"un noyau à 6 chaînons étant égal à 0, 1 ou 2, |
| a, b, c, d, e et f | sont égaux à 0 ou 1, à condition que la somme a + c + e soit égale à 0, 1, 2 ou 3. |

**2.** Mélange cristallin liquide selon la. revendication 1, caractérisé en ce que, comme constituant A, on utilise des composés de formule (I) et/ou (II) dans lesquels les symboles ont la signification suivante:

$R_1$, $R_2$ sont identiques ou différents et représentent un groupe alkyle linéaire ou ramifié de 1 à 12, respectivement 3 à 12 atomes de carbone, l'un des groupes $CH_2$ adjacents à l'oxygène pouvant être remplacé par -CO-;

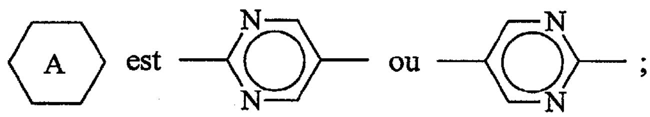

comme constituant B, on utilise des composés de formule (III) dans laquelle

$R^1$ représente un reste alkyle linéaire de 1 à 14 atomes de carbone, dans lequel un ou deux groupes $CH_2$ non adjacents peuvent être remplacés par -O-, -CO-, -CO-O-, -O-CO-, -O-CO-O- ou $-Si(CH_3)_2-$,

$A^1$, $A^2$, $A^3$ et $A^4$ sont identiques ou différents et représentent un groupe 1,4-phénylène ou un groupe pyrimidine-2,5-diyle, dont un ou deux atomes d'hydrogène peuvent être remplacés par F; un groupe trans-1,4-cyclohexylène ou un groupe (1,3,4)-thiadiazole-2,5-diyle;

et, comme constituant C, on utilise des composés de formule (IV) dans lesquels

$R^1$, $R^2$ représentent un reste alkyle linéaire de 1 à 14 atomes de carbone, dans lequel un ou deux groupes $CH_2$ non adjacents peuvent être remplacés par -O-, -CO-, -CO-O-, -O-CO-, -O-CO-O- ou $-Si(CH_3)_2-$,

$A^1$, $A^2$ et $A^3$ sont identiques ou différents et représentent un groupe 1,4-phénylène ou un groupe pyrimidine-2,5-diyle dont un ou deux atomes d'hydrogène peuvent être remplacés par F; un groupe trans-1,4-cyclohexylène ou un groupe (1,3,4)-thiadiazole-2,5-diyle.

**3.** Mélange cristallin liquide selon la revendication 1 ou 2, caractérisé en ce qu'il contient, en plus des constituants A, B et C, au moins un composé de l'un des groupes D à G ci-dessous:

D. des composés du silicium de formule (V)

$$R^1\text{-}(\text{-}A^1)_i(\text{-}M^1)_k(\text{-}A^2)_l(\text{-}M^2)_m(\text{-}A^3)_n\text{-}R^2 \qquad (V)$$

dans laquelle

$R^1$ représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO- ou -O-CO-O-,

$R^1$ représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO-, -O-CO-O-, à condition qu'un groupe $CH_2$ non lié à de l'oxygène soit remplacé par $-Si(CH_3)_2-$,

$A^1$, $A^2$, $A^3$ sont identiques ou différents et représentent un groupe 1,4-phénylène dans lequel un ou deux atomes d'hydrogène peuvent être remplacés par F, un groupe trans-1,4-cyclohexylène, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent

| | |
|---|---|
| | être remplacés par F, ou un groupe (1,3,4)-thiadiazole-2,5-diyle, |
| $M^1$, $M^2$ | sont identiques ou différents et représentent un groupe -CO-O-, -O-CO-, $-CH_2$-O-, -O-$CH_2$-, |
| i, k, l, m et n | sont égaux à O ou 1, à condition que la somme i + l + n soit égale à 2 ou 3. |

E. des dérivés d'hydroquinone de formule (VI)

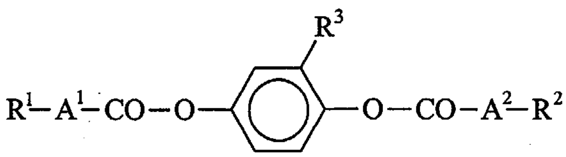

(VI)

dans laquelle

| | |
|---|---|
| $R^1$, $R^2$ | sont identiques ou différents ramifié de 1, respectivement 3, à 1 groupes $CH_2$ non adjacents peuvent être remplacés par -O-, -CO-, -CO-O-, -O-CO-, -O-CO-O-, |
| $R^3$ | représente $-CH_3$, $-CF_3$ ou $-C_2H_5$; |
| $A^1$ et $A^2$ | sont identiques ou différents et représentent |

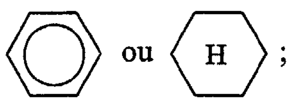

F. des pyridylpyrimidines de formule (VII)

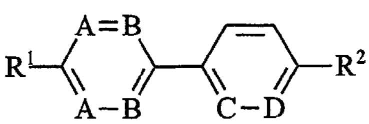

(VII)

dans laquelle

| | |
|---|---|
| A | est N et B est CH, ou A est CH et B est N, C est N et D est CH, ou C est CH et D est N; un ou deux groupes CH pouvant être remplacés par des groupes CF, |
| $R^1$ et $R^2$ | sont identiques ou différents et représentent un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO- ou -O-CO-O-, et |

G. des phénylbenzoates de formule (VIII)

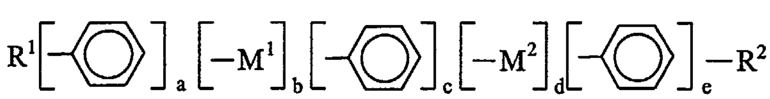

(VIII)

dans laquelle

| | |
|---|---|
| $R^1$ et $R^2$ | sont identiques ou différents et représentent un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO- ou -O-CO-O-, |
| $M^1$ et $M^2$ | sont identiques ou différents et représentent -CO-O- ou -O-CO-, a, b, c, d, et e sont égaux à 0 ou 1, à condition que a + c + e = 2 ou 3 et b + d = 1 ou 2. |

**4.** Mélange cristallin liquide selon l'une ou plusieurs des revendications précédentes, caractérisé en ce qu'il contient au moins un composé de chacun des groupe D à G.

**5.** Mélange cristallin liquide ferroélectrique selon l'une ou plusieurs des revendications précédentes, caractérisé en ce qu'il contient au moins deux composés optiquement actifs des groupes H à L suivants:

H. des phénylbenzoates optiquement actifs de formule (IX)

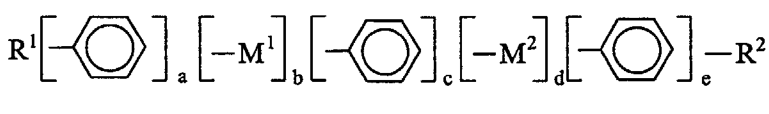

(IX)

dans laquelle

$R^1$ et $R^2$ sont identiques ou différents et représentent un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO- ou -O-CO-O-, au moins l'un des restes $R^1$ et $R^2$ étant un groupe alkyle ramifié optiquement actif,

$M^1$ et $M^2$ sont identiques ou différents et représentent -CO-O- ou -O-CO- ou une liaison simple,

a, b, c, d, et e sont égaux à 0 ou 1, à condition que a + c + e = 2 ou 3 et b + d = 1 ou 2;

I. des oxirane-éthers de formule (X)

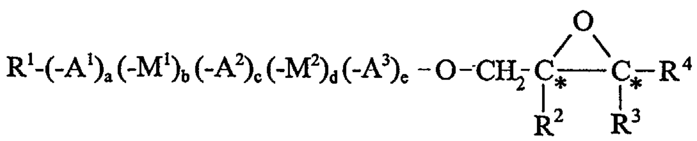

(X)

dans laquelle les symboles et les indices ont la signification suivante:

* désigne un centre chiral,

$R^1$ représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO- , -O-CO-O- ou $-Si(CH_3)_2-$, ou le groupe optiquement actif suivant:

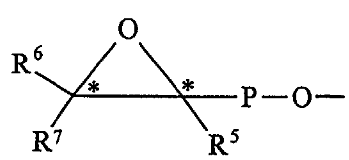

$R^2$, $R^3$, $R^4$, $R^5$, $R^6$ et $R^7$ sont identiques ou différents et représentent H ou un reste alkyle linéaire ou ramifié de 1 à 16 atomes de carbone,

P représente $-CH_2-$ ou -CO-,

$A^1$, $A^2$ et $A^3$ sont identiques ou différents et représentent un groupe 1,4-phénylène dans lequel un ou deux atomes d'hydrogène peuvent être remplacés par F, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F, un groupe trans-1,4-cyclohexylène dans lequel un ou deux atomes d'hydrogène peuvent être remplacés par -CN et/ou $-CH_3$, ou un groupe (1,3,4)-thiadiazole-2,5-diyle,

| | |
|---|---|
| $M^1$ et $M^2$ | sont identiques ou différents et représentent -CO-O-, -O-CO-, $-CH_2-O-$, $-O-CH_2-$ ou $-CH_2-CH_2-$, |
| a, b, c, d, e | sont égaux à 0 ou 1; |

J. des oxirane-esters optiquement actifs de formule (XI)

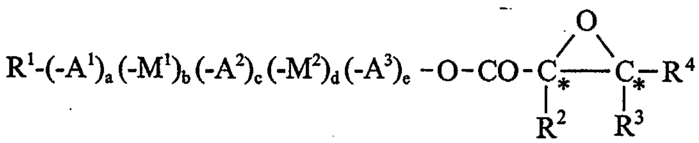

(XI)

dans laquelle les symboles et les indices ont la signification suivante:

| | |
|---|---|
| * | désigne un centre chiral, |
| $R^1$ | représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO-, -O-CO-O- ou $-Si(CH_3)_2-$, |
| $R^2$, $R^3$ et $R^4$ | sont identiques ou différents et représentent H ou un reste alkyle linéaire ou ramifié de 1 à 16 atomes de carbone, |
| $A^1$, $A^2$ et $A^3$ | sont identiques ou différents et représentent un groupe 1,4-phénylène dans lequel un ou deux atomes d'hydrogène peuvent être remplacés par F, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F, un groupe trans-1,4-cyclohexylène dans lequel un ou deux atomes d'hydrogène peuvent être remplacés par -CN et/ou $-CH_3$, ou un groupe (1,3,4)-thiadiazole-2,5-diyle, |
| $M^1$ et $M^2$ | sont identiques ou différents et représentent -CO-O-, -O-CO-, $-CH_2-O-$, $-O-CH_2-$ ou $-CH_2-CH_2-$, |
| a, b, c, d, e | sont égaux à 0 ou 1; |

K. des dioxolane-éthers optiquement actifs de formule (XII)

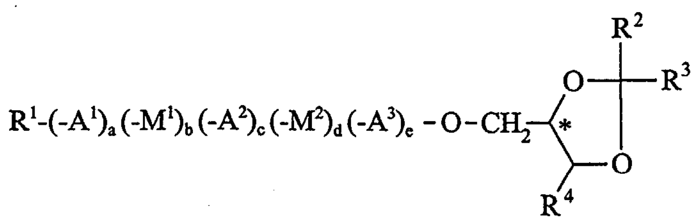

(XII)

dans laquelle les symboles et les indices ont la signification suivante:

| | |
|---|---|
| * | désigne un centre chiral, |
| $R^1$ | représente un reste alkyle linéaire ou ramifié de 1 à 22, respectivement 3 à 22 atomes de carbone, dans lequel un ou deux groupes $CH_2$ non adjacents peuvent être remplacés par -O-, -CO-, -CO-O-, -O-CO-, -O-CO-O- ou $-Si(CH_3)_2-$, |
| $R^2$, $R^3$ et $R^4$ | sont identiques ou différents et représentent H ou un reste alkyle linéaire ou ramifié de 1 à 16, respectivement 3 à 10 atomes de carbone, ou un reste alcényle de 2 à 16 atomes de carbone, $R^2$ et $R^3$ pouvant aussi former ensemble un reste $-(CH_2)_5-$, |
| $A^1$, $A^2$ et $A^3$ | sont identiques ou différents et représentent un groupe 1,4-phénylène dans lequel un ou deux atomes d'hydrogène peuvent être remplacés par F, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F,un groupe trans-1,4-cyclohexylène dans lequel un ou deux atomes d'hydrogène peuvent être remplacés par -CN et/ou $-CH_3$, ou un groupe (1,3,4)-thiadiazole-2,5-diyle, |

| | |
|---|---|
| $M^1$ et $M^2$ | sont identiques ou différents et représentent -CO-O-, -O-CO-, $-CH_2-O-$, $-O-CH_2-$ ou $-CH_2-CH_2-$, |
| a, b, c, d, e | sont égaux à 0 ou 1; |

L. des dioxolane-esters optiquement actifs de formule (XIII)

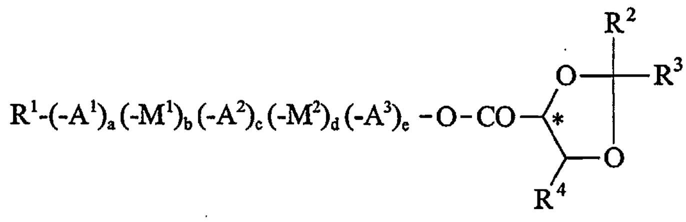

(XIII)

dans laquelle:

| | |
|---|---|
| $R^1$ | représente un reste alkyle linéaire ou ramifié de 1 à 16, respectivement 3 à 16 atomes de carbone, dans lequel un ou plusieurs groupes $CH_2$ non adjacents peuvent être remplacés par -O-, -CO-, -O-CO- ou -CO-O-, |
| $R^2$, $R^3$ et $R^4$ | sont identiques ou différents et représentent H ou un reste alkyle ou alcényle de 1 à 10, respectivement 2 à 10 atomes de carbone, $R^2$ et $R^3$ pouvant aussi former ensemble un reste $-(CH_2)_5-$, |
| $A^1$, $A^2$ et $A^3$ | sont identiques ou différents et représentent un groupe 1,4-phénylène dans lequel un ou deux atomes d'hydrogène peuvent être remplacés par F, un groupe pyridine-2,5-diyle dans lequel un ou deux atomes d'hydrogène peuvent être remplacés par F, un groupe pyrimidine-2,5-diyle dans lequel un ou deux atomes d'hydrogène peuvent être remplacés par F, un groupe trams-1,4-cyclohexylène dans lequel un ou deux atomes d'hydrogène peuvent être remplacés par -CN et/ou $-CH_3$, ou un groupe (1,3,4)-thiadiazole-2,5-diyle, |
| $M^1$ et $M^2$ | sont identiques ou différents et représentent -CO-O-, -O-CO-, $-CH_2-O-$, $-O-CH_2-$ ou $-CH_2-CH_2-$, |
| a, , c, d, e | sont égaux à 0 ou 1. |

**6.** Mélange cristallin liquide ferroélectrique selon la revendication 5, caractérisé en ce qu'il contient au moins un composé de chacun de trois des groupes H à L.

**7.** Mélange cristallin liquide ferroélectrique selon la revendication 5 ou 6, caractérisé en ce qu'il contient au moins un composé du groupe M:
M. des composés macrocycliques de formule (XIV)

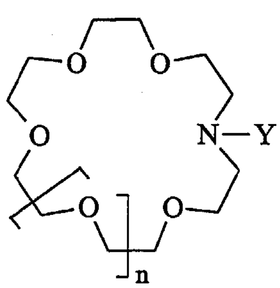

(XIV)

dans laquelle

n est 0 ou 1;
Y représente un groupe -CO-(t-butyle) ou -CO-adamantyle.

**8.** Mélange cristallin liquide selon l'une ou plusieurs des revendications 1 à 7, caractérisé en ce que la fraction des différents constituants, en pourcentage en masse, est

A: 5 à 80 %,
B: 1 à 40 %,
C: 1 à 25 %,
D: 0 à 40 %,
E: 0 à 15 %,
F: 0 à 20 %,
G: 0 à 30 %,
H: 0 à 15 %,
I: 0 à 20 %,
J: 0 à 20 %,
K: 0 à 10 %,
L: 0 à 15 %,
M: 0 à 10 %.

**9.** Utilisation de mélanges cristallins liquides selon l'une ou plusieurs des revendications 1 à 8 dans des dispositifs de commutation et d'affichage électro-optiques.

**10.** Dispositif de commutation et d'affichage électro-optique, contenant un mélange cristallin liquide selon l'une ou plusieurs des revendications 1 à 8.